# EUROPEAN PATENT APPLICATION

(11) **EP 4 738 850 A1**
(43) Date of publication of application: **06.05.2026**
(21) Application number: 24894689.9
(22) Date of filing: 22.11.2024
(51) Int. Cl.: H04N 21/488, H04N 21/431, H04N 21/472

(54) **ELECTRONIC DEVICE AND OPERATION METHOD THEREOF**

(30) Priority: 23.11.2023 KR 20230164843
(71) Applicant: Samsung Electronics Co., Ltd., Suwon-si, Gyeonggi-do 16677 (KR)
(72) Inventor: JANG, Sungchang, Suwon-si, Gyeonggi-do 16677 (KR); SHIN, Yongwoo, Suwon-si, Gyeonggi-do 16677 (KR); KIM, Ikjoon, Suwon-si, Gyeonggi-do 16677 (KR)
(74) Representative: Appleyard Lees IP LLP
(86) International application number: PCT/KR2024/018637
(87) International publication number: WO 2025/110798

(57) **Abstract**

An electronic device is configured to detect whether a notification event indicating information that another user is attempting to provide to a user has occurred, obtain, based on detecting that the notification event has occurred, an indication including at least one of a visual effect or an auditory effect corresponding to the notification event, and provide, to the user, the indication by using at least one of an information display area or an audio output unit.

## Description

### Technical Field

An embodiment of the disclosure relates to a display device capable of reproducing content, and an operating method of the display device. More particularly, an embodiment of the disclosure relates to an electronic device from which a notification event related to reproduction of content may be effectively provided, and an operating method of the electronic device.

### Background Art

With the technological development of display devices, display devices capable of providing various functions have been developed. A representative example of a display device is a television (TV). TVs in the art perform a function of simply receiving broadcast signals and reproducing broadcast content (e.g., news, dramas, entertainment programs, etc.).

Recently, with the technological development of display devices, various applications or programs may be stored and installed in TVs to perform various functions, and various functions and services, in addition to a function of broadcast content reproduction, may be provided through the installed applications. For example, a game application may be stored and installed in a TV and game content may be executed through the game application.

Also, with the development of communication technology or communication connection function of display devices, display devices may provide various functions or services via a wired or wireless communication with an external device. For example, a display device may be connected to an external device such as a game console device or a game server providing game content through a wired or wireless communication, and may receive game content from the external device or the game server through the wired or wireless communication.

The game content may include multiplayer game content in which a plurality of users may form a team and perform game play with other teams. Here, the plurality of users constituting one team need to cooperate with each other as part of the game play, and thus, the game content or a display device reproducing the game content may provide various means for cooperative operations of the plurality of users in the same team.

### Disclosure of Invention

### Solution to Problem

Provided are an electronic device capable of outputting a play screen of game content that may improve user satisfaction while providing the game content, an operating method of the electronic device, and a non-transitory computer-readable recording medium.

The technical features aimed to achieve in the disclosure are not limited to the aforementioned features, and other unstated technical features will be clearly understood by one of ordinary skill in the art in view of descriptions below.

According to an aspect of the disclosure, an electronic device includes memory storing at least one instruction; and at least one processor. According to an aspect of the disclosure, the at least one processor is configured to, by executing the at least one instruction, detect whether a notification event has occurred in a display screen in which an image is displayed, the notification event indicating information that another user is attempting to provide to a user. According to an aspect of the disclosure, the at least one processor is configured to, by executing the at least one instruction, obtain, based on detecting that the notification event has occurred, an indication comprising at least one of a visual effect or an auditory effect corresponding to the notification event. According to an aspect of the disclosure, the at least one processor is configured to, by executing the at least one instruction, provide, to the user, the indication by using at least one of an information display area or an audio output unit.

According to an aspect of the disclosure, an operating method of an electronic device includes detecting whether a notification event has occurred in a display screen in which an image is displayed, the notification event indicating information that another user is attempting to provide to a user. According to an aspect of the disclosure, the operating method of an electronic device includes obtaining, based on detecting that the notification event has occurred, an indication comprising at least one of a visual effect or an auditory effect corresponding to the notification event. According to an aspect of the disclosure, the operating method of an electronic device includes providing, to the user, the indication by using at least one of an information display area or an audio output unit.

According to an aspect of the disclosure, a non-transitory computer-readable storage medium storing one or more computer-executable instructions, for causing a computer to perform an operating method of an electronic device, that, when executed by at least one processor of the electronic device, cause the electronic device to: detect whether a notification event has occurred in a display screen in which an image is displayed, the notification event indicating information that another user is attempting to provide to a user; obtain, based on detecting that the notification event has occurred, an indication comprising at least one of a visual effect or an auditory effect corresponding to the notification event; and provide to the user, the indication by using at least one of an information display area or an audio output unit.

An electronic device, an operating method of the electronic device, and a non-transitory computer-readable recording medium according to an embodiment of the disclosure may effectively increase an experience of a user who plays game content by using the electronic device.

The effects which are obtainable from embodiments of the disclosure are not limited to the aforementioned effects, and other unstated effects will be clearly understood by one of ordinary skill in the art in view of descriptions below.

### Brief Description of Drawings

The disclosure will now be described more fully through the detailed descriptions below with reference to the accompanying drawings in which reference numerals denote structural elements.
FIG.1 is a reference diagram for describing an example in which a plurality of electronic devices display game content provided from a server device, according to an embodiment of the disclosure.
FIG.2 illustrates an example of a system according to an embodiment of the disclosure.
FIG.3 is a block diagram of an electronic device according to an embodiment of the disclosure.
FIG.4 is a flowchart of an operating method of an electronic device, according to an embodiment of the disclosure.
FIG.5 is a flowchart of an operating method of an electronic device, according to an embodiment of the disclosure.
FIG.6 illustrates an example of a graphical user interface for selecting or inputting an item for a notification event, according to an embodiment of the disclosure.
FIG.7 illustrates an example in which an electronic device outputs screens of various aspect ratios, according to an embodiment of the disclosure.
FIG.8 is a reference diagram for describing an example of sharing a mini-map by using a mini-map sharing function, according to an embodiment of the disclosure.
FIG.9 illustrates an example of a flowchart of a method by which an electronic device detects whether a notification event has occurred, according to an embodiment of the disclosure.
FIG.10 illustrates an example of a display screen of an electronic device, according to an embodiment of the disclosure.
FIG.11 illustrates an example of notification event information according to an embodiment of the disclosure.
FIG.12 illustrates an example of notification event information according to an embodiment of the disclosure.
FIG.13 illustrates an example of black areas in which a visual effect corresponding to a notification event is displayed, according to an embodiment of the disclosure.
FIG.14 is a reference diagram for describing an example in which an electronic device displays a visual effect corresponding to a notification event in a display screen of a display device that is communicatively connected to the electronic device, according to an embodiment of the disclosure.
FIG.15 illustrates an example of a flowchart of an operating method of an electronic device, according to an embodiment of the disclosure.
FIG.16 is a reference diagram for describing information about a notification event settable according to a user input, according to an embodiment of the disclosure.

### Mode for the Invention

Hereinafter, the disclosure will now be described more fully with reference to the accompanying drawings for one of ordinary skill in the art to be able to perform embodiments of the disclosure without difficulty. The disclosure may, however, be embodied in many different forms and should not be construed as being limited to the embodiments of the disclosure set forth herein. In addition, in the drawings, parts irrelevant to the description are omitted for clarity, and like components are denoted by like reference numerals throughout the specification. Also, throughout the drawings, like reference numerals denote like elements.

Throughout the specification, it will also be understood that when an element is referred to as being "connected to" or "coupled with" another element, it can be directly connected to or coupled with the other element, or it can be electrically connected to or coupled with the other element by having an intervening element interposed therebetween. Also, when a part "includes" or "comprises" an element, unless there is a particular description contrary thereto, the part can further include other elements, not excluding the other elements.

Throughout the specification, the expression "in some embodiments" or "in an embodiment" is described, but the expression does not necessarily indicate the same embodiment.

Some embodiments of the disclosure may be described in terms of functional block configurations and various processing steps. Some or all of functional blocks may be realized by any number of hardware and/or software configurations configured to perform the specified functions. For example, the functional blocks of the disclosure may be implemented by one or more processor or microprocessors, or may be implemented by circuitry configurations for predetermined functions. In addition, for example, the functional blocks of the disclosure may be implemented with any programming or various scripting languages. The functional blocks may be implemented in algorithms that are executed on one or more processors. Furthermore, the disclosure could employ any number of techniques according to the related art for electronics configuration, signal processing and/or data processing, and the like. The terms "module", "configuration", or the like may be broadly used and are not limited to mechanical or physical embodiments.

Furthermore, connecting lines or connectors between elements shown in drawings are intended to represent exemplary functional connection and/or physical or circuitry connection between the elements. It should be noted that many alternative or additional functional connections, physical connections or circuitry connections may be present in a practical device.

Throughout the disclosure, the expression "at least one of a, b or c" indicates only a, only b, only c, both a and b, both a and c, both b and c, all of a, b, and c, or variations thereof.

In an embodiment of the disclosure, an electronic device may indicate all electronic devices capable of receiving content from a source device and displaying a screen corresponding thereto. As used herein, the content may include game content, lecture content, movie content, home training service content, or the like.

For example, an electronic device, according to an embodiment of the disclosure, may refer to all electronic devices capable of selectively displaying at least one content and may be implemented in various forms including a television (TV), a smart TV, a terminal for digital broadcasting, a tablet computer, a personal computer (PC), a smartphone, a mobile phone, a computer, a laptop, or the like. Also, the electronic device may be stationary or may be mobile or portable for a user.

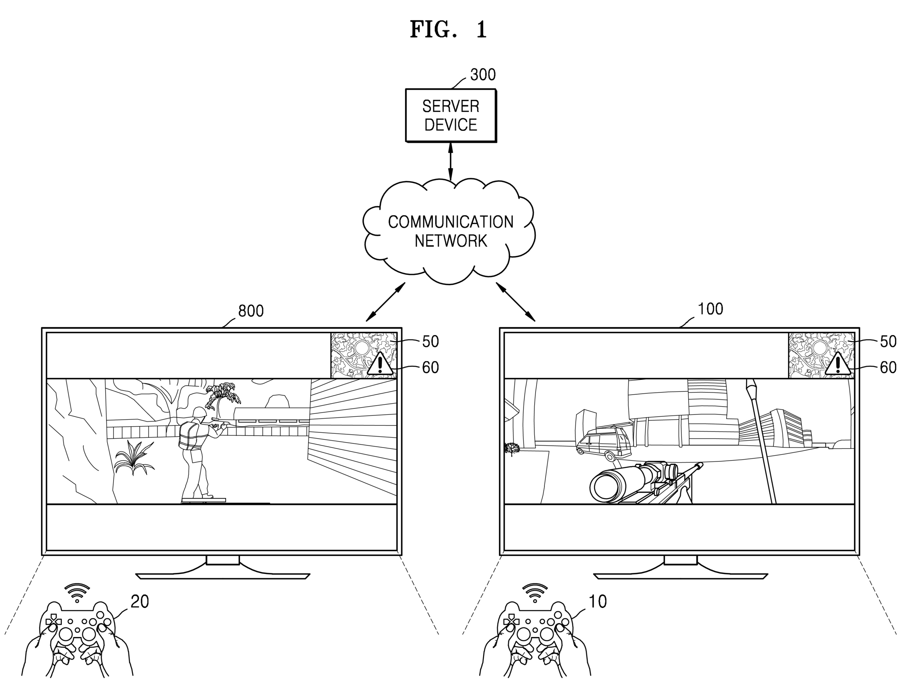

FIG. 1 is a reference diagram of an example in which a plurality of electronic devices display game content provided from a server device, according to an embodiment of the disclosure.

Referring to FIG. 1, a server device 300 may execute a content application, according to a request from an electronic device 100, and may transmit a result screen according to execution of the content application to the electronic device 100 via a communication network. For example, when the server device 300 receives a request of executing a game application from the electronic device 100, the server device 300 may execute the game application, and may transmit a result screen or a result image which is rendered according to execution of the game application to the electronic device 100 via the communication network.

Also, when game content is a type of a game for which a plurality of users constitute one team and play, the server device 300 may execute a content application according to requests from a plurality of electronic devices, and may transmit an execution result screen according to execution of the content application to the plurality of electronic devices via a communication network. For example, in a case where the server device 300 receives a request of executing a game application from the electronic device 100 and an electronic device 800, the server device 300 may execute the game application, and may transmit an execution result screen or a result image which is rendered according to execution of the game application to the electronic device 100 and the electronic device 800 via the communication network.

The electronic device 100 may transmit a request of executing a content application to the server device 300, may receive an execution result screen according to execution of the content application, according to the execution request, from the server device 300, and may display the received execution result screen on a display. A user of the electronic device 100 may manipulate an input device 10 to control an execution screen displayed on the display of the electronic device 100. According to manipulation of the user, the input device 10 may transmit a control signal to the electronic device 100, and the electronic device 100 may transmit the control signal received from the input device 10 to the server device 300. The server device 300 may execute the content application, based on the control signal received from the electronic device 100, and may transmit the execution result screen to the electronic device 100. Also, the server device 300 may transmit the execution result screen to the electronic device 800 that performs play of the same content application.

The electronic device 800 may transmit a request of executing a content application to the server device 300, may receive an execution result screen according to execution of the content application, according to the execution request, from the server device 300, and may display the received execution result screen on a display. A user of the electronic device 800 may manipulate an input device 20 to control an execution screen displayed on the display of the electronic device 800. According to manipulation of the user, the input device 20 may transmit a control signal to the electronic device 800, and the electronic device 800 may transmit the control signal received from the input device 20 to the server device 300. The server device 300 may execute the content application, based on the control signal received from the electronic device 800, and may transmit the execution result screen to the electronic device 100 and the electronic device 800. Also, the server device 300 may transmit the execution result screen to the electronic device 100 that performs play of the same content application.

In this manner, when the electronic device 100 and the electronic device 800 cooperatively play the same game content, the user of the electronic device 100 and the user of the electronic device 800 may chat with each other for a cooperative operation or may provide a notification to each other. In order to mutually provide a notification between a plurality of users that play game content, the game content may provide a means such as a mini-map, a notification event including a ping, or the like.

The mini-map refers to a miniature map that is often disposed on a screen corner of a video game so as to assist a game player in setting a direction within a game world. That is, the mini-map refers to a window in which a place where game is played is downscaled like a map. In general, factors included in the mini-map vary according to video game genres. In general, the mini-map may include locations of player characters including an ally and an enemy, an ally unit or structure, a target and surrounding terrain, or the like. Also, the mini-map may provide a visual warning effect to inform various situations of a game. A warning (attack notification, etc.) defined in a system may be displayed in the mini-map, and also, a function by which a player directly warns an ally may be included. The function by which a player directly warns an ally may be referred to as a notification event such as a ping. The ping is useful to provide a notification to an ally by a keyboard shortcut or one click of a mouse when there is no time to input a chat in an urgent game play situation. The ping may be referred to as a notification event for a game player to deliver information to another game player in a game environment.

In the example of FIG. 1, the electronic device 100 and the electronic device 800 may each display a mini-map 50 on each display. For example, when the user of the electronic device 800 inputs an item for a notification event to provide a notification to the user of the electronic device 100 which is an ally, the input for the notification event input by the electronic device 800 may be displayed as a notification event 60 in each mini-map 50 of the electronic device 100 and the electronic device 800. By using this method, the user of the electronic device 100 may receive the notification provided from the electronic device 800 that is an ally.

The notification event 60 displayed in the mini-map 50 may provide a notification means that is useful between game users.

However, a normal mini-map is also a miniature map with a small size, and a size of a notification event displayed within the mini-map is also small, and thus, in an urgent situation in which a user plays a game, it may be difficult for the notification to be immediately identified by the user. Therefore, embodiments of the disclosure provide examples in which the notification event 60 displayed in the mini-map 50 may be further effectively identified by a user.

According to an embodiment of the disclosure, the electronic device 100 may be configured to detect occurrence of a notification event indicating information that another game player is attempting to deliver, in game content displayed on a display. According to an embodiment of the disclosure, the electronic device 100 may detect a notification event from a mini-map. According to an embodiment of the disclosure, the electronic device 100 may detect the mini-map from an area designated according to a user input or may automatically detect the mini-map.

According to an embodiment of the disclosure, the electronic device 100 may be configured to identify an attribute of the notification event detected according to occurrence of the notification event. According to an embodiment of the disclosure, the electronic device 100 may store attributes of one or more notification events, and may identify the attribute of the detected notification event from among the stored attributes of the notification events. According to an embodiment of the disclosure, the electronic device 100 may store one or more notification events. The one or more notification events may include a notification event set as a default by the electronic device 100 and a notification event designated by a user.

According to an embodiment of the disclosure, the electronic device 100 may be configured to obtain an indication including at least one of a visual effect or an auditory effect which corresponds to the attribute of the notification event identified by the electronic device 100. For example, the visual effect may include various visual effects including color, blinking, a text, or the like.

According to an embodiment of the disclosure, the electronic device 100 may be configured to provide the indication by using at least one of an information display area or an audio output unit. According to an embodiment of the disclosure, the electronic device 100 may use a black area in which game content is not displayed in a display screen, as the information display area. According to an embodiment of the disclosure, when the mini-map is displayed on an external display device, the electronic device 100 may use at least a portion of a display screen of the external display device, as the information display area.

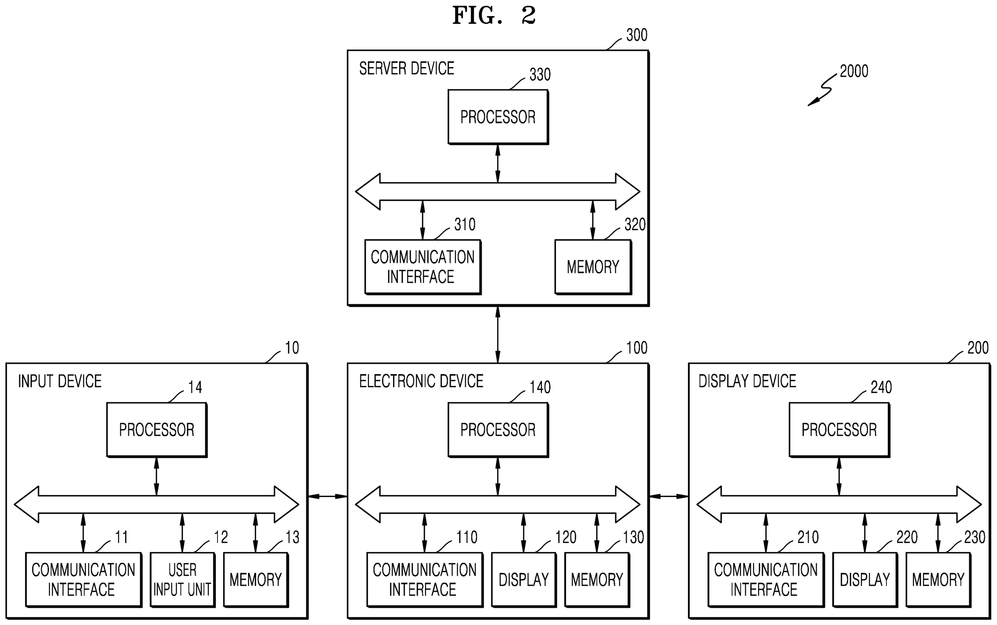

FIG. 2 illustrates an example of a system according to an embodiment of the disclosure.

Referring to FIG. 2, the system may include the electronic device 100 for displaying content, a display device 200 for sharing at least a portion of content displayed in the electronic device 100, the server device 300, and the input device 10 for controlling the electronic device 100.

The electronic device 100 may output or display content received from the server device 300. The electronic device 100 may include various forms of electronic devices including a network TV, a smart TV, an Internet TV, a web TV, an Internet protocol TV (IPTV), a PC, etc. which can receive and output content. The electronic device 100 may be referred to as a display device in that the electronic device 100 receives and displays content, and may also be referred to as a content receiving device, a sink device, a computing device, or the like.

The electronic device 100 may be connected to the display device 200 via a wired or wireless communication network.

The electronic device 100 and the display device 200 may be connected via a wired connection means for forming a wired network, thereby performing transmission and reception of content. For example, the wired connection means may include a cable, and each of the electronic device 100 and the display device 200 may include one or more ports for cable connection. For example, the one or more ports may include digital input interfaces including a high-definition multimedia interface (HDMI) port, a display port, a type-C port, or the like.

The electronic device 100 and the display device 200 may be connected via a wireless connection means for forming a wireless network, thereby performing transmission and reception of content. For example, the wireless connection means may include a wireless HDMI communication module, and each of the electronic device 100 and the display device 200 may include a wireless HDMI communication module. As another example, the wireless connection means may include at least one communication module for performing a communication according to communication standards including Bluetooth, Wi-Fi, Bluetooth low energy (BLE), near field communication (NFC)/radio frequency identification (RFID), Wi-Fi Direct (WFD), ultra-wideband (UWB), ZigBee, Internet, 3rd generation (3G), 4th generation (4G), 5th generation (5G) and/or 6th generation (6G), or the like.

The electronic device 100 is a device capable of displaying an image or data, according to a request of a user, and may include a communication interface 110, a display 120, memory 130, and a processor 140.

The communication interface 110 may perform a communication with at least one external device. Here, the 'communication' may indicate an operation of transmitting and/or receiving data, a signal, a request, and/or a command.

The communication interface 110 may perform a wired or wireless communication with at least one external device. The at least one external device may be the display device 200, the server device 300, the input device 10, etc.

The communication interface 110 may include at least one of a communication module, communication circuitry, a communication device, an input/output port, or an input/output plug for performing a wireless communication with at least one external device.

For example, the communication interface 110 may include at least one wireless communication module, wireless communication circuitry, or a wireless communication device for performing a wireless communication with at least one external device.

For example, the communication interface 110 may include a short range communication module, e.g., an infrared (IR) communication module), which is capable of receiving a control command from a remote controller such as the input device 10 that is located nearby. In this regard, the communication interface 110 may receive a control signal from the remote controller.

As another example, the communication interface 110 may include at least one communication module for performing a communication according to communication standards including Bluetooth, Wi-Fi, BLE, NFC/RFID, WFD, UWB, ZigBee, etc. Alternatively, the communication interface 110 may further include a communication module for performing a communication with a server for supporting a long range communication, according to long range communication standards. For example, the communication interface 110 may include a communication module for performing a communication via a network for Internet communication. Also, the communication interface 110 may include a communication module for performing a communication via a communication network that conforms to communication standards including 3G, 4G, 5G and/or 6G.

As another example, the communication interface 110 may include at least one port for connection to an external device via a wired cable so as to communicate with the external device by wire. For example, the communication interface 110 may include at least one of a HDMI port, a component jack, a PC port, or a universal serial bus (USB) port. Accordingly, the communication interface 110 may perform a communication with the external device wired-connected via at least one port. Here, a port may indicate a physical device configuration to which a cable, a communication line, a plug, etc. can be connected or inserted.

As described above, the communication interface 110 may include at least one support element for supporting a communication between the electronic device 100 and an external device. Here, the support element may include the communication module, the communication circuitry, the communication device, the port (for input/output of data), the cable port (for input/output of data), the plug (for input/output of data), etc. For example, the at least one support element included in the communication interface 110 may include an Ethernet communication module, a Wi-Fi communication module, a Bluetooth communication module, an IR communication module, a USB port, a tuner (or, a broadcast receiver), a HDMI port, a display port (DP), a digital visual interface (DVI) port, etc.

The display 120 may output an image onto a screen, according to control by the processor 140. For example, the processor 140 may control the display 120 to output a desired image onto the display 120.

The display 120 outputs an image onto a screen. For example, the display 120 may output an image corresponding to video data via an internally-included display panel so as to allow the video data to be visually recognized by a user. In detail, video data forming content may include a plurality of frame images, and the display 120 may reproduce the video content by sequentially displaying the plurality of frame images, according to control by the processor 140. For example, the display 120 may output a content image corresponding to the video data onto a screen, according to control by the processor 140.

As it is illustrated that the display 120 is provided in the electronic device 100, but the disclosure is not limited thereto. The display 120 may be provided outside the electronic device 100 and may be connected to the electronic device 100 via wired/wireless communication.

The memory 130 may store at least one instruction, data, information, and/or an application. For example, the memory 130 may store at least one instruction executable by the processor 140. For example, the memory 130 may store at least one program executable by the processor 140. For example, the memory 130 may store an application for providing a specified service.

The memory 130 may include at least one type of storage medium among flash memory, a hard disk, a multimedia card micro, a memory card (e.g., a secure digital (SD) or extreme digital (XD) memory card), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disc.

The processor 140 may execute at least one instruction to control a desired operation to be performed. Here, the at least one instruction may be stored in an internal memory included in the processor 140 or may be stored, separately from the processor 140, in the memory 130 included in the electronic device 100.

The processor 140 may execute at least one instruction to control one or more configurations included in the electronic device 100 to perform a desired operation. Therefore, when describing an example in which the processor 140 performs specified operations, the example may indicate that the processor 140 controls one or more configurations included in the electronic device 100 to perform the specified operations.

Also, while an example in which the processor 140 is formed as one processor is described and shown, the processor 140 may be implemented in a form including a plurality of processors.

For example, the processor 140 may include a RAM used to store a signal or data input from an external source of the electronic device 100 or as a storage area corresponding to various tasks performed in the electronic device 100, a ROM used to store a control program for controlling the electronic device 100, an application for providing a specified function or service, and/or a plurality of instructions, and at least one processor. The processor 140 may include a graphics processing unit (GPU) for processing graphics corresponding to video. The processor 140 may be implemented as a system on chip (SoC) in which a core and a GPU are integrated. Also, the processor 140 may include a multi-core over a single core. For example, the processor 140 may include a dual core, a triple core, a quad core, a hexa core, an octa core, a deca core, a dodeca core, a hexadecimal core, etc.

The processor 140 may include various processing circuitry and/or a plurality of processors. For example, the term "processor" used herein including claims may include various processing circuitry including at least one processor. One or more processors in the at least one processor may be configured to individually in a distributed manner or collectively perform various functions to be described here. As used herein, "processor", "at least one processor", and "one or more processors" may be configured to perform various functions. However, the recited terms cover a situation in which one processor performs a part of functions and other processors performs the other part of the functions, and a situation in which one processor may perform all functions. Also, the at least one processor may include a combination of processors configured to perform a variety of the disclosed functions in a distributed manner. The at least one processor may execute program instructions to achieve or perform various functions.

According to an embodiment of the disclosure, the processor 140 may store one or more instructions in an internal memory thereof, and may execute the one or more instructions stored in the internal memory to control operations of the electronic device 100 to be performed. That is, the processor 140 may execute at least one instruction or program stored in the internal memory of the processor 140 or stored in the memory 130 to perform a specified operation.

According to an embodiment of the disclosure, the processor 140 may execute one or more instructions stored in the memory 130 to control the communication interface 110 to transmit a request of executing a content application to the server device 300 and to receive an execution result screen obtained by executing the content application from the server device 300.

According to an embodiment of the disclosure, the processor 140 may execute the one or more instructions stored in the memory 130 to control the display 120 to display the execution result screen of the content application received from the server device 300.

According to an embodiment of the disclosure, the processor 140 may execute the one or more instructions stored in the memory 130 to detect whether a notification event to indicate information that other user is attempting to transmit has occurred in a display screen on which an image is displayed.

According to an embodiment of the disclosure, the processor 140 may execute the one or more instructions stored in the memory 130 to obtain an indication including at least one of a visual effect or an auditory effect which corresponds to the detected notification event, when occurrence of the notification event has been detected.

According to an embodiment of the disclosure, the processor 140 may execute the one or more instructions stored in the memory 130 to identify a predefined area from an image displayed on the display.

According to an embodiment of the disclosure, the processor 140 may execute the one or more instructions stored in the memory 130 to identify the notification event from the identified predefined area.

According to an embodiment of the disclosure, the processor 140 may execute the one or more instructions stored in the memory 130 to identify the identified predefined area by using set information based on a user input of setting the predefined area or automatically detect the predefined area from the image.

According to an embodiment of the disclosure, the processor 140 may execute the one or more instructions stored in the memory 130 to detect a notification event by detecting an item image corresponding to the notification event from the predefined area by using one or more pieces of notification event information.

According to an embodiment of the disclosure, the one or more pieces of notification event information may include identification information about each notification event, an item image corresponding to each notification event, and a visual effect or auditory effect corresponding to each notification event.

According to an embodiment of the disclosure, the processor 140 may execute the one or more instructions stored in the memory 130 to obtain an indication corresponding to the identified notification event by referring to registered indications corresponding to the one or more pieces of notification event information and the identification information about each notification event.

According to an embodiment of the disclosure, the processor 140 may execute the one or more instructions stored in the memory 130 to provide the visual effect by using a predetermined area of the display screen on which the image is not displayed.

According to an embodiment of the disclosure, the information display area may include a predetermined area in a display of an external display device to share and display at least a portion of the display screen displayed on the electronic device, and according to an embodiment of the disclosure, the processor 140 may execute the one or more instructions stored in the memory 130 to provide the visual effect by using the predetermined area in the display of the external display device.

According to an embodiment of the disclosure, at least the portion of the shared screen may include a mini-map area, and the predetermined area in the display of the external display device may include an area excluding an area displaying the mini-map area.

According to an embodiment of the disclosure, the processor 140 may execute the one or more instructions stored in the memory 130 to identify a location where the notification event occurred in the game content and to determine a location where the indication is to be provided, based on the location where the notification event occurred.

The electronic device 100 may be any device including a processor and memory and configured to perform a function. The electronic device 100 may be a stationary device or a portable device. For example, the electronic device 100 may indicate a device including a display and configured to display image content, video content, game content, graphic content, etc. The electronic device 100 may output or display an image or content received from the server device 300. The electronic device 100 may include, for example, any type of electronic device capable of receiving an outputting content, for example, a TV such as a network TV, a smart TV, an Internet TV, a web TV, or an IP TV, a computer such as a desktop computer, a laptop computer, or a tablet computer, or a smart device such as a smartphone, a cellular phone, a game player, a music player, a vide player, a medical device, or a home appliance. The electronic device 100 may be referred to as a display device as it can receive and display content, and may also be referred to as a content receiver, a sink device, a computing device, or the like.

A block diagram of the electronic device 100 shown in FIG. 2 is a block diagram for an embodiment of the disclosure. Each element of the block diagram may be combined, added, or omitted according to actual specification of the electronic device 100. For example, when required, two or more elements may be combined into one element, or one element may be divided into two or more elements. Also, a function performed by each block may be for descriptions of embodiments of the disclosure, and particular operations or devices therefor do not limit the scope of the disclosure.

The display device 200 will now be described.

The display device 200 may output or display content received from the electronic device 100. The display device 200 may be connected to the electronic device 100 by using a wired/wireless communication technology, and may receive and display at least a portion of content displayed on the electronic device 100. For example, the display device 200 may receive, from the electronic device 100, and display a mini-map that is at least a portion of a content execution result screen displayed on the display of the electronic device 100.

The display device 200 is a device capable of displaying an image or data, according to a request of a user, and may include a communication interface 210, a display 220, memory 230, and a processor 240.

The communication interface 210 may include one or more modules configured to enable wired/wireless communication between the electronic device 100 and the display device 200.

According to an embodiment of the disclosure, the communication interface 210 may receive content to be shared from the electronic device 100, by performing a communication with the electronic device 100 according to a wired communication technology or a wireless communication technology. The wireless communication technology may include a short-range communication technology. The short-range communication technology may include, for example, a Bluetooth communication, a Wi-Fi communication, an infrared (IR) communication, or the like.

The display 220 may output an image or data processed by the electronic device 100. According to an embodiment of the disclosure, the display 220 may receive a mini-map area from the electronic device 100, and may display the mini-map area.

The memory 230 may store a program for processing and controlling by the processor 240, and may store data input to the display device 200 or output from the display device 200. Also, the memory 230 may store a plurality of pieces of data necessary for operations of the display device 200.

The memory 230 may include at least one type of storage medium from among flash memory, a hard disk, a multimedia card micro, a memory card (e.g., a SD or XD memory card), a RAM, a SRAM, a ROM, an EEPROM, a PROM, a magnetic memory, a magnetic disk, and an optical disc.

The processor 240 controls all operations of the display device 200. For example, the processor 240 may execute one or more instructions stored in the memory 230 to perform functions of the display device 200 described in the disclosure.

According to an embodiment of the disclosure, the processor 240 may store one or more instructions in an internal memory thereof, and may execute the one or more instructions stored in the internal memory to control operations of the display device 200 to be performed. That is, the processor 240 may execute at least one instruction or program stored in the internal memory of the processor 240 or stored in the memory 230 to perform a specified operation.

According to an embodiment of the disclosure, the processor 240 may execute one or more instructions stored in the memory 230 to perform a communication with the electronic device 100 by connecting to the electronic device 100 via a wireless and/or wired communication.

According to an embodiment of the disclosure, the processor 240 may execute one or more instructions stored in the memory 230 to receive at least a portion of a content screen displayed on the display of the electronic device 100 and to display the received at least a portion of the content screen. For example, at least the portion of the content screen which is received from the electronic device 100 may include a mini-map area displayed in game content.

According to an embodiment of the disclosure, the processor 240 may execute one or more instructions stored in the memory 230 to provide at least one of a visual effect or an auditory effect which corresponds to a notification event on at least a portion of a screen, based on a signal received from the electronic device 100 while the mini-map area received from the display device 200 is displayed. At least the portion of the screen to which the visual effect corresponding to the notification event is provided may include a black area in which the mini-map area is not displayed.

The display device 200 may be any device including a processor and memory and configured to perform a function. The display device 200 may be a stationary device or a portable device. For example, the display device 200 may indicate a device including a display and configured to display image content, video content, game content, graphic content, etc. The display device 200 may include, for example, any type of electronic device capable of receiving an outputting content, for example, a TV such as a network TV, a smart TV, an Internet TV, a web TV, or an IP TV, a computer such as a desktop computer, a laptop computer, or a tablet computer, or a smart device such as a smartphone, a cellular phone, a game player, a music player, a vide player, a medical device, or a home appliance. The display device 200 may be referred to as a display device as it can receive and display content, and may also be referred to as a content receiver, a sink device, an electronic device, a computing device, or the like.

A block diagram of the display device 200 shown in FIG. 2 is a block diagram for an embodiment of the disclosure. Each element of the block diagram may be combined, added, or omitted according to actual specification of the display device 200. For example, when required, two or more elements may be combined into one element, or one element may be divided into two or more elements. Also, a function performed by each block may be for descriptions of embodiments of the disclosure, and particular operations or devices therefor do not limit the scope of the disclosure.

The server device 300 will now be described.

The server device 300 may provide content such as a video, audio, or the like to the electronic device 100. The server device 300 may include various types of an electronic device capable of providing content to the electronic device 100. The server device 300 may be referred to as a source device as it can provide content, and may also be referred to as a host device, a content provider, an electronic device, a storage device, a computing device, a server computer, or the like.

The server device 300 may include a communication interface 310, memory 320, and a processor 330. However, the server device 300 may be implemented with more elements than the shown elements, and is not limited thereto. For example, the server device 300 may include a separate image processor for performing image processing on an image of an application executed in the server device 300.

The communication interface 310 may include one or more modules configured to enable a wireless communication between the server device 300 and the electronic device 100. According to an embodiment of the disclosure, the communication interface 310 may perform a communication with the electronic device 100 according to Internet protocol. According to an embodiment of the disclosure, the communication interface 310 may perform a communication with the input device 10 according to Internal protocol.

The memory 320 may store a program for processing and controlling by the processor 330, and may store data input to the server device 300 or output from the server device 300.

The memory 320 may include at least one type of storage medium from among flash memory, a hard disk, a multimedia card micro, a memory card (e.g., a SD or XD memory card), a RAM, a SRAM, a ROM, an EEPROM, a PROM, a magnetic memory, a magnetic disk, and an optical disc.

The processor 330 controls all operations of the server device 300. For example, the processor 330 may execute one or more instructions stored in the memory 320 to perform functions of the server device 300 described in the disclosure.

According to an embodiment of the disclosure, the processor 330 may store one or more instructions in an internal memory thereof, and may execute the one or more instructions stored in the internal memory to control the afore-described operations to be performed. That is, the processor 330 may execute at least one instruction or program stored in the internal memory of the processor 330 or stored in the memory 320 to perform a specified operation.

According to an embodiment of the disclosure, the processor 330 may execute one or more instructions stored in the memory 320 to receive a request of executing a content application from the electronic device 100 and to transmit an execution result screen of the executed content application to the electronic device 100.

A block diagram of the server device 300 shown in FIG.2 is a block diagram for an embodiment of the disclosure. Each element of the block diagram may be combined, added, or omitted according to actual specification of the server device 300. For example, when required, two or more elements may be combined into one element, or one element may be divided into two or more elements. Also, a function performed by each block may be for descriptions of embodiments of the disclosure, and particular operations or devices therefor do not limit the scope of the disclosure.

The input device 10 will now be described.The input device 10 may include a communication interface 11, a user input unit 12, memory 13, and a processor 14. However, the input device 10 may be implemented with more elements than the shown elements, and is not limited thereto.

The communication interface 11 may include one or more modules configured to enable wired/wireless communication between the input device 10 and the electronic device 100. According to an embodiment of the disclosure, the communication interface 11 may perform a communication with the electronic device 100 according to a short-range communication technology. The short-range communication technology may include, for example, a Bluetooth communication, a Wi-Fi communication, an IR communication, or the like. According to an embodiment of the disclosure, the communication interface 11 may perform a communication with the server device 300 according to Internet protocol.

The user input unit 12 may be any interface means capable of receiving a user input. For example, the user input unit 12 may include a manipulation button for receiving an input of the user by being arranged in a portion of the input device 10, a touch sensitive display configured to detect a touch input, a microphone for receiving a speech utterance input of the user, or the like.

According to an embodiment of the disclosure, the user input unit 12 may receive a user input for controlling a game content execution result screen displayed on the display of the electronic device 100, based on control by the processor 14.

The memory 13 may store a program for processing and controlling by the processor 14, and may store data input to the input device 10 or output from the input device 10.

The memory 13 may include at least one type of storage medium from among flash memory, a hard disk, a multimedia card micro, a memory card (e.g., a SD or XD memory card), a RAM, a SRAM, a ROM, an EEPROM, a PROM, a magnetic memory, a magnetic disk, and an optical disc.

The processor 14 controls all operations of the input device 10. For example, the processor 14 may execute one or more instructions stored in the memory 13 to perform functions of the input device 10 described in the disclosure.

According to an embodiment of the disclosure, the processor 14 may store one or more instructions in an internal memory thereof, and may execute the one or more instructions stored in the internal memory to control the afore-described operations to be performed. That is, the processor 14 may execute at least one instruction or program stored in the internal memory of the processor 14 or stored in the memory 13 to perform a specified operation.

According to an embodiment of the disclosure, the processor 14 may execute one or more instructions stored in the memory 13 to perform communication connection to the electronic device 100 by using a short-range wireless communication technology. The short-range wireless communication technology may include a Bluetooth communication technology, a WFD technology, an IR communication technology, or the like.

According to an embodiment of the disclosure, the processor 14 may execute one or more instructions stored in the memory 13 to control the communication interface 11 to transmit a control signal to the electronic device 100, the control signal corresponding to a user input received via the user input unit 12.

The input device 10 may be any device including a processor and memory and configured to perform a function. The input device 10 may include various electronic devices such as a remote controller, a game controller, a smartphone, or the like.

A block diagram of the input device 10 shown in FIG. 2 is a block diagram for an embodiment of the disclosure. Each element of the block diagram may be combined, added, or omitted according to actual specification of the input device 10. For example, when required, two or more elements may be combined into one element, or one element may be divided into two or more elements. Also, a function performed by each block may be for descriptions of embodiments of the disclosure, and particular operations or devices therefor do not limit the scope of the disclosure.

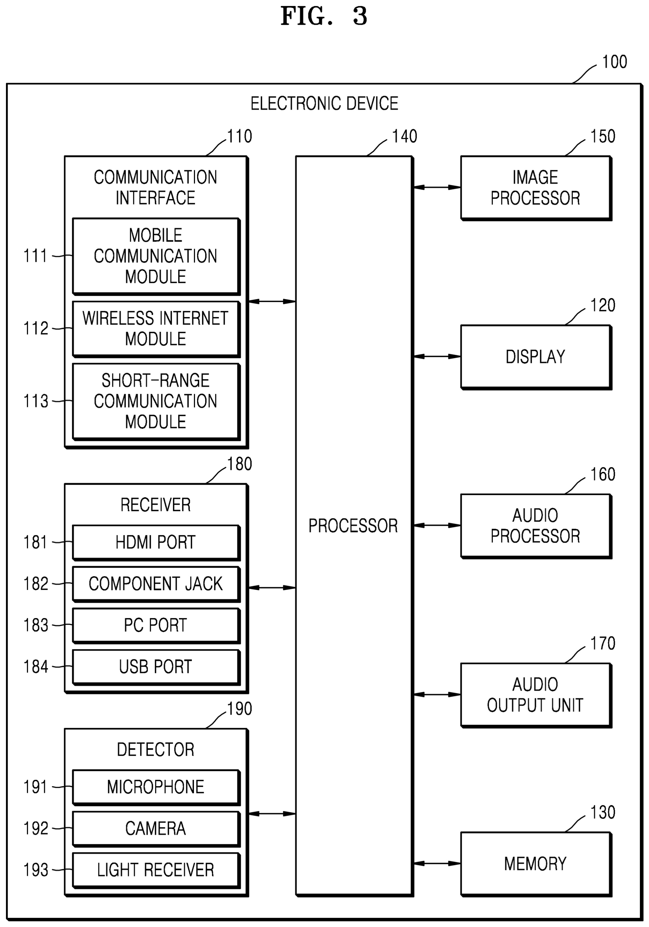

FIG. 3 is a block diagram of an electronic device, according to an embodiment of the disclosure.

Referring to FIG. 3, the electronic device 100 may include an image processor 150, an audio processor 160, an audio output unit 170, a receiver 180, and a detector 190, as well as the communication interface 110, the display 120, the memory 130, and the processor 140.

The communication interface 110 may include one or more modules configured to enable a wireless communication between the electronic device 100 and a wireless communication system or between the electronic device 100 and a network including other electronic device. For example, the communication interface 110 may include a mobile communication module 111, a wireless Internet module 112, and a short-range communication module 113.

The mobile communication module 111 transmits and receives wireless signals to and from at least one of a base station, an external terminal, or a server in a mobile communication network. The wireless signals may include various types of data based on transmission and reception of voice call signals, video call signals, or text/multimedia messages.

The wireless Internet module 112 indicates a module for accessing wireless Internet, and may be arranged inside or outside the electronic device 100. As the wireless Internet technology, Wireless Local Area Network (WLAN including Wi-Fi), Wireless broadband (WiBro), World Interoperability for Microwave Access (WiMax), High Speed Downlink Packet Access (HSDPA), or the like may be used. The electronic device 100 may perform Wi-Fi peer to peer (P2P) connection to other device via the wireless Internet module 112.

The short-range communication module 113 indicates a module for a short-range communication. As the short-range communication technology, Bluetooth, BLE, RFID, infrared Data Association (IrDA), UWB, ZigBee, etc. may be used.

The display 120 may display, on a screen, an image signal received from the server device 300.

The memory 130 may store a program related to an operation of the electronic device 100, and various data occurring during the operation of the electronic device 100.

The memory 130 may store at least one instruction. Also, the memory 130 may store at least one program to be executed by the processor 140. Also, the memory 130 may store an application for providing a specified service.

In detail, the memory 130 may include at least one type of storage medium from among flash memory, a hard disk, a multimedia card micro, a memory card (e.g., a SD or XD memory card), a RAM, a SRAM, a ROM, an EEPROM, a PROM, a magnetic memory, a magnetic disk, and an optical disc.

The processor 140 controls all operations of the electronic device 100. For example, the processor 140 may execute one or more instructions stored in the memory 130 to perform functions of the electronic device 100 described in the disclosure.

According to an embodiment of the disclosure, the processor 140 may store one or more instructions in an internal memory thereof, and may execute the one or more instructions stored in the internal memory to control operations of the electronic device 100 to be performed. That is, the processor 140 may execute at least one instruction or program stored in the internal memory of the processor 140 or stored in the memory 130 to perform a specified operation.

The processor 140 performs a function of controlling all operations of the electronic device 100 and a signal flow between internal elements (not shown) of the electronic device 100, and processing data. When there is a user input or a preset and stored condition is satisfied, the processor 140 may execute an operating system (OS) and various applications stored in the memory 130.

The processor 140 may include a graphics processing unit (GPU) for processing graphics corresponding to a video. The GPU generates a screen including various objects, such as an icon, an image, or text, by using an operator and a renderer. The operator calculates attribute values such as coordinate values, shapes, sizes, and colors of objects to be displayed according to layout of a screen by using a user interaction detected via the detector 190. The renderer generates a screen of various layouts including objects, based on the attribute values calculated by the operator.

According to an embodiment of the disclosure, the processor 140 may be configured to execute the at least one instruction stored in the memory 130 to detect whether a notification event to indicate information that other user is attempting to transmit has occurred in a display screen on which an image is displayed.

According to an embodiment of the disclosure, the processor 140 may be configured to execute the at least one instruction stored in the memory 130 to obtain an indication including at least one of a visual effect or an auditory effect which corresponds to the detected notification event, when occurrence of the notification event has been detected.

According to an embodiment of the disclosure, the processor 140 may be configured to execute the at least one instruction stored in the memory 130 to provide the indication by using at least one of an information display area or an audio output unit.

According to an embodiment of the disclosure, the processor 140 may be configured to execute the at least one instruction stored in the memory 130 to identify a predefined area from an image displayed on the display and to identify the notification event from the identified predefined area.

According to an embodiment of the disclosure, the processor 140 may be configured to execute the at least one instruction stored in the memory 130 to identify the identified predefined area by using set information based on a user input of setting the predefined area or automatically detect the predefined area from the image.

According to an embodiment of the disclosure, the processor 140 may be configured to execute the at least one instruction stored in the memory 130 to detect a notification event by detecting an item image corresponding to the notification event from the predefined area by using one or more pieces of notification event information. The one or more pieces of notification event information may include identification information about each notification event, an item image corresponding to each notification event, and a visual effect or auditory effect corresponding to each notification event.

According to an embodiment of the disclosure, the processor 140 may be configured to execute the at least one instruction stored in the memory 130 to obtain an indication corresponding to the detected notification event by referring to registered indications corresponding to the one or more pieces of notification event information and the identification information about each notification event.

According to an embodiment of the disclosure, the processor 140 may be configured to execute the at least one instruction stored in the memory 130 to provide the visual effect by using an information display area of the display screen on which the image is not displayed.

The information display area may include a predetermined area in a display of an external display device to share and display at least a portion of the display screen displayed on the electronic device, and the processor 140 may be configured to provide the visual effect by using the predetermined area in the display of the external display device on which the image is not displayed. At least the portion of the shared screen may include a mini-map area, and the predetermined area in the display of the external display device may include an area excluding an area displaying the mini-map area.

According to an embodiment of the disclosure, the processor 140 may be configured to execute the at least one instruction stored in the memory 130 to identify a location where the notification event occurred in the game content and to determine a location where the indication is to be provided, based on the location where the notification event occurred.

The image processor 150 may process an image signal received from the receiver 180 or the communication interface 110 and may output the image signal to the display 120, based on control by the processor 140.

The audio processor 160 may convert an audio signal received from the receiver 180 or the communication interface 110 into an analog audio signal and may output the analog audio signal to the audio output unit 170, based on control by the processor 140.

The audio output unit 170 may output audio (e.g., a voice, sound) input via the communication interface 110 or the receiver 180. Also, the audio output unit 170 may output audio stored in the memory 130, based on control by the processor 140. The audio output unit 170 may include at least one of a speaker, a headphone output terminal, a Sony/Philips digital interface (S/PDIF) terminal, or a combination thereof.

The receiver 180 may receive video (e.g., a moving picture, etc.), audio (e.g., speech, music, etc.), and auxiliary information (e.g., electronic program guide (EPG)) from the outside of the electronic device 100, based on control by the processor 140. The receiver 180 may include one of a high-definition multimedia interface (HDMI) port 181, a component jack 182, a PC port 183, and a USB port 184, or a combination thereof. The receiver 180 may further include a display port (DP), a thunderbolt, a mobile high-definition link (MHL), as well as the HDMI port 181.

The detector 190 detects speech of a user, an image of the user, or an interaction of the user, and may include a microphone 191, a camera 192, and a light receiver 193.

The microphone 191 receives speech uttered by the user. The microphone 191 may convert the received speech into an electric signal and output the electric signal to the processor 140. The user's speech may include, for example, speech corresponding to a menu or function of the electronic device 100.

The camera 192 may receive an image (e.g., consecutive frames) corresponding to motion of the user including a gesture within a camera recognition range. The processor 140 may select a menu displayed on the electronic device 100 by using a received motion recognition result or may perform control corresponding to the motion recognition result.

The light receiver 193 receives an optical signal (including the control signal) received from an external control device. The light receiver 193 may receive an optical signal corresponding to a user input (e.g., touch, press, touch gesture, speech, or motion) from a control device. The control signal may be extracted from the received optical signal, based on control by the processor 140.

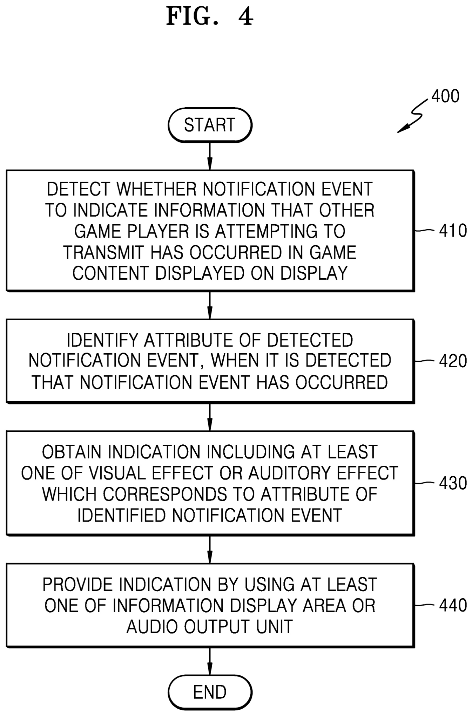

FIG. 4 is a flowchart of an operating method of an electronic device, according to an embodiment of the disclosure.

Referring to FIG. 4, in operation 410, the electronic device 100 may detect whether a notification event to indicate information that other game player is attempting to transmit has occurred in a game execution result screen displayed on the display.

According to an embodiment of the disclosure, the electronic device 100 may transmit a request of executing a game application to the server device 300, and may receive, from the server device 300, and display an execution result screen obtained by executing the game application, in response to the request, on the display.

According to an embodiment of the disclosure, the electronic device 100 may analyze an image corresponding to the execution result screen displayed on the display, and thus, may detect whether the notification event to indicate the information that other game player is attempting to transmit has occurred in the game execution result screen displayed on the display. The notification event to indicate the information that other game player is attempting to transmit may include, for example, a ping displayed in a mini-map.

According to an embodiment of the disclosure, the electronic device 100 may identify a predetermined area from an image corresponding to the execution result screen, and may detect whether the notification event has occurred in the identified predetermined area. For example, the predetermined area may include a mini-map area that displays information related to a progress situation of game content.

According to an embodiment of the disclosure, the electronic device 100 may receive setting of the predetermined area via a user input, and may identify the predetermined area set according to the user input, from the image corresponding to the execution result screen.

According to an embodiment of the disclosure, the electronic device 100 may automatically identify the predetermined area by performing an image analysis on the image corresponding to the execution result screen.

In operation 420, when it is detected that the notification event has occurred, the electronic device 100 may identify identification information of the detected notification event.

According to an embodiment of the disclosure, the electronic device 100 may store one or more pieces of notification event information.

According to an embodiment of the disclosure, the one or more pieces of notification event information may include an identifier with respect to each notification event, and an indication with respect to each notification event. The indication with respect to each notification event may include at least one of a visual effect or an auditory effect which is to be provided in response to each notification event. For example, the visual effect may include color, blinking, a text, or the like.

In operation 430, the electronic device 100 may obtain an indication including at least one of a visual effect or an auditory effect which corresponds to identification information of the identified notification event.

In operation 440, the electronic device 100 may provide the indication by using at least one of an information display area or an audio output unit.

According to an embodiment of the disclosure, the electronic device 100 may provide the visual effect included in the indication by using the information display area or may provide the auditory effect included in the indication by using the audio output unit. The information display area may include a black area that is not used in displaying the game content in the electronic device 100.

According to an embodiment of the disclosure, the electronic device 100 may provide the visual effect included in the indication by using the information display area of the display screen of the electronic device 100.

According to an embodiment of the disclosure, the electronic device 100 may provide the visual effect included in the indication by using an information display area of a display screen of a display device that is communication connected to the electronic device 100. For example, the electronic device 100 may communicatively connect to the display device so as to share the mini-map area, thereby allowing the mini-map area to be displayed on the display device. In order to provide the visual effect included in the indication by using the information display area of the display screen of the display device, the electronic device 100 may transmit information about the indication or information about the visual effect to the display device. The information display area of the display screen of the display device may include an area that is a black area in which the mini-map area is not displayed in the display screen.

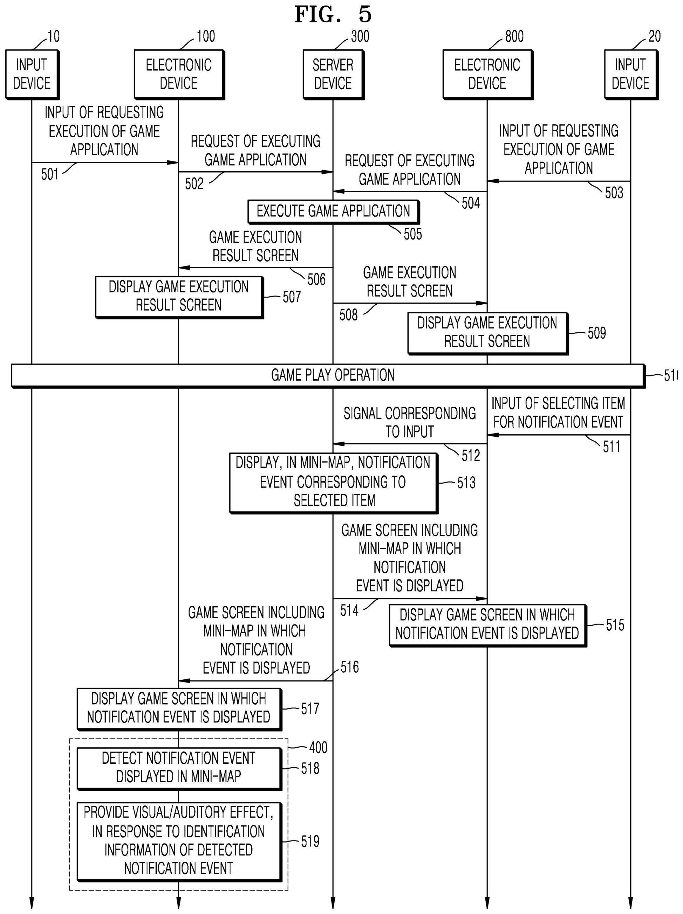

FIG. 5 is a flowchart of an operating method of an electronic device, according to an embodiment of the disclosure.

Referring to FIG. 5, in operation 501, a user of the electronic device 100 may input a request of executing a game application by using the input device 10, and thus, the input device 10 may transmit the input of the request of executing a game application to the electronic device 100.

In operation 502, the electronic device 100 may transmit, to the server device, the request of executing a game application received from the input device 10.

In operation 503, a user of the electronic device 800 may input a request of executing a game application by using the input device 20, and thus, the input device 20 may transmit the input of the request of executing a game application to the electronic device 800.

In operation 504, the electronic device 800 may transmit, to the server device 300, the request of executing a game application received from the input device 20.

In operation 505, the server device 300 may execute the game application execution-requested by the electronic device 100. The game application execution-requested by the electronic device 100 and the game application execution-requested by the electronic device 800 may be the same game application.

In operation 506, the server device 300 may transmit a game execution result screen obtained by executing the game application to the electronic device 100.

In operation 507, the electronic device 100 may display the execution result screen of the game application which is received from the server device 300.

In operation 508, the server device 300 may transmit the execution result screen of the game application to the electronic device 800.

In operation 509, the electronic device 800 may display the execution result screen of the game application which is received from the server device 300.

In operation 510, the electronic device 100 and the electronic device 800 may perform a game play operation via the server device 300. The electronic device 100 and the electronic device 800 may play the same game application, and a user of the electronic device 100 and a user of the electronic device 800 may constitute the same team (e.g., an ally).

In game play operation 510, the server device 300 may execute the game application according to an input for controlling execution of the game application by any one of the input device 10 of the electronic device 100 or the input device 20 of the electronic device 800, and may transmit a game execution result screen to the electronic device 100 and the electronic device 800. For example, when the input device 10 of the electronic device 100 transmits an input for controlling execution of the game application to the electronic device 100, the electronic device 100 may transmit a control signal corresponding to the input for controlling execution to the server device 300. The server device 300 may execute the game application, based on the received control signal, and may transmit a game execution result screen to the electronic device 100 and the electronic device 800. Then, each of the electronic device 100 and the electronic device 800 may display the game execution result screen received from the server device 300. In this manner, while the user of the electronic device 100 and the user of the electronic device 800 constitute one team and play a game, the user of the electronic device 100 and the user of the electronic device 800 may share information with each other or provide a notification to each other for efficient game play. To this end, a notification event may be used.

In operation 511, the user of the electronic device 800 may perform an input of selecting an item for a notification event by using the input device 20. For example, the electronic device 800 may provide a graphical user interface for inputting an item for a notification event, and the user of the electronic device 800 may input a notification event by using the graphical user interface.

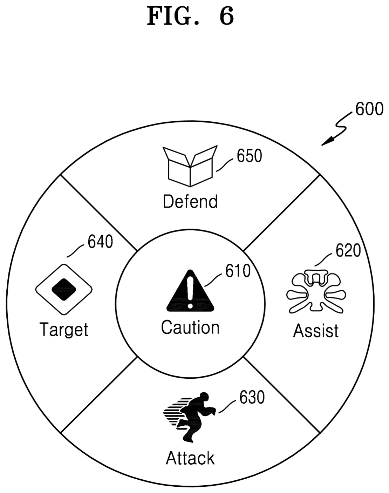

FIG. 6 illustrates an example of a graphical user interface for selecting or inputting an item for a notification event, according to an embodiment of the disclosure.

Referring to FIG. 6, a graphical user interface 600 may include five (5) items that are a first item 610, a second item 620, a third item 630, a fourth item 640, and a fifth item 650. The first item 610 may indicate a message indicating that caution is required, the second item 620 may indicate a message indicating that assistance is requested, the third item 630 may indicate a message indicating that there will be an attack, the fourth item 640 may indicate a message indicating that there is a target, and the fifth item 650 may indicate a message indicating that a defense is requested.

In order to provide a warning or a notification to other game player of the same team, one item of the graphical user interface 600 may be selected to provide a notification event. For example, a user of the electronic device 800 may perform, by using the input device 20, an input of selecting one item of the graphical user interface 600 at a desired location in a game space. Then, the input device 10 may transmit an input of selecting one item for a notification event to the electronic device 800.

In operation 512, the electronic device 800 may transmit a signal corresponding to the input of selecting one item for the notification event to the server device 300, the signal being received from the input device 20.

In operation 513, the server device 300 may display a notification event in a mini-map, the notification event corresponding to an item selected by the electronic device 800 according to the signal received from the electronic device 800.

In operation 514, when the server device 300 transmits a game screen including the mini-map in which the notification event is displayed to the electronic device 800, in operation 515, the electronic device 800 may display the game screen including the mini-map in which the notification event is displayed.

In operation 516, when the server device 300 transmits the game screen including the mini-map in which the notification event is displayed to the electronic device 100, in operation 517, the electronic device 100 may display the game screen including the mini-map in which the notification event is displayed. The electronic device 100 may display game screens of various aspect ratios.

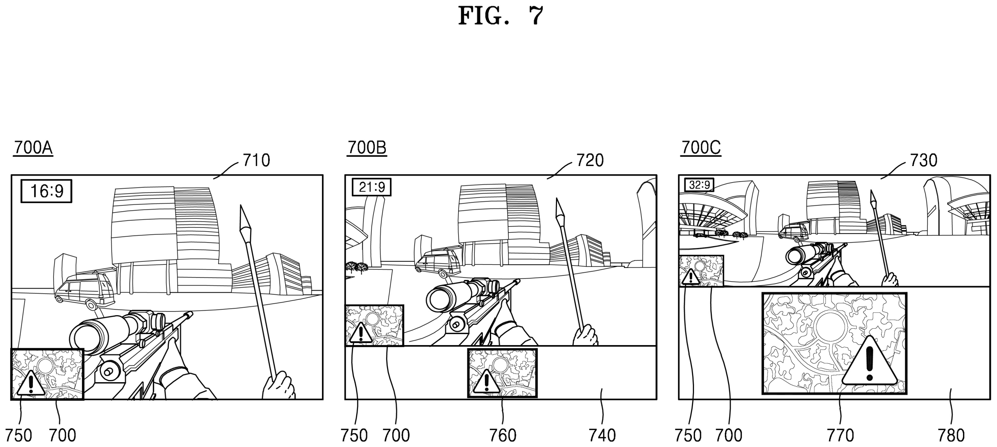

FIG. 7 illustrates images displayed in an electronic device that supports outputs of various aspect ratios.

FIG. 7 illustrates an example in which the electronic device outputs screens of various aspect ratios, according to an embodiment of the disclosure.

The electronic device 100, according to an embodiment of the disclosure may support an output of screens of various aspect ratios. Here, an aspect ratio indicates a ratio of a vertical-direction length of a screen to a horizontal-direction length thereof, and may be expressed as a value such as 4:3, 16:9, 16:10, 21:9, 32:9, or the like. Also, as the aspect ratio indicates a ratio of a horizontal length of an output screen or image to a vertical length thereof, the aspect ratio may be referred to as a screen ratio, an image ratio, or the like. The aspect ratio of the screen may be optimized according to a type of an image. For example, an aspect ratio that improves user satisfaction may be selected according to a type of an image output via the screen. For example, an aspect ratio of 16:9 is a mostly-used screen ratio, and may be used in an output of a menu screen, a work screen, or the like.

As another example, an aspect ratio of 21:9 may be used for a case of a movie watching, a game, etc. so as to be provided more information on a screen in a breadthwise direction (or, a horizontal direction). As another example, an aspect ratio of 32:9 may be used for an output of an image to provide or receive a wide field of view. In detail, the aspect ratio of 32:9 may be largely used in games including a sports game, a racing game, a battle game, etc. which provide 360-degree images or panorama images to increase user satisfaction. In displaying images of the same game content, different fields of view may be provided according to aspect ratios of the images. For example, when an aspect ratio of an image increases to extend in a breadthwise direction, a wider field of view or a wider viewing angle may be provided. For example, in order of an aspect ratio of 32:9, an aspect ratio of 21:9, and an aspect ratio of 16:9, a wider field of view or a wider viewing angle may be provided.

Referring to FIG. 7, when a ratio of a vertical-direction length of a display (or a display panel) included in the electronic device 100 to a horizontal-direction length thereof, i.e., an aspect ratio of the display of the electronic device 100) is 16:9, provided are a screen 700A outputting a game screen image 710 having an aspect ratio of 16:9, a screen 700B outputting a game screen image 720 having an aspect ratio of 21:9, and a screen 700C outputting a game screen image 730 having an aspect ratio of 32:9.

As the screen 700A displays the game screen image 710 having the aspect ratio of 16:9 in a display screen having an aspect ratio of 16:9, the game screen image 710 may be displayed to exactly fit to the display screen. A mini-map 700 may be displayed at the lower-left corner of the game screen image 710, and may display a notification event 750 provided by other game player, e.g., a user of the electronic device 800). The mini-map 700 may be provided at various locations in the game screen image 710 according to user setting.

As the screen 700B displays the game screen image 720 having the aspect ratio of 21:9 in the display screen having the aspect ratio of 16:9, the game screen image 720 may have an area that is a black area 740 that is partly displayed in the display screen and in which the game screen image 720 is not displayed. The mini-map 700 may be displayed at the lower-left corner of the game screen image 720, and may display the notification event 750 provided by other game player, e.g., the user of the electronic device 800. The mini-map 700 may be provided at various locations in the game screen image 720 according to user setting. The electronic device 100 may provide a mini-map zoom function. That is, as a mini-map provided by the server device 300 has a small size and thus may not be identified, the electronic device 100 may provide a function of extending and displaying the mini-map. When the mini-map zoom function is selected, the electronic device 100 may extend the mini-map 700 included in the game screen image 720, and may display an extended mini-map image 760 in an area in which the game screen image 720 is not displayed, e.g., in a portion of the area that is the black area 740. Therefore, a user may further easily recognize a notification event occurred in a mini-map, by using the extended mini-map image 760.

As the screen 700C displays the game screen image 730 having the aspect ratio of 32:9 in the display screen having the aspect ratio of 16:9, the game screen image 730 may have an area that is a black area 780 that is partly displayed in the display screen and in which the game screen image 730 is not displayed. The mini-map 700 may be displayed at the lower-left corner of the game screen image 730, and may display the notification event 750 provided by other game player (e.g., the user of the electronic device 800. The mini-map 700 may be provided at various locations in the game screen image 730 according to user setting. The electronic device 100 may provide a mini-map zoom function. Also, the electronic device 100 may display an extended mini-map image 770 of the mini-map 700 included in the game screen image 730, in the area (e.g., in a portion of the black area 780), in which the game screen image 730 is not displayed. Therefore, a user may further easily recognize a notification event occurred in a mini-map, by using the extended mini-map image 770.

According to an embodiment of the disclosure, the electronic device 100 may allow a mini-map to be displayed on other device such as a display device outside the electronic device 100, by using a mini-map sharing function.

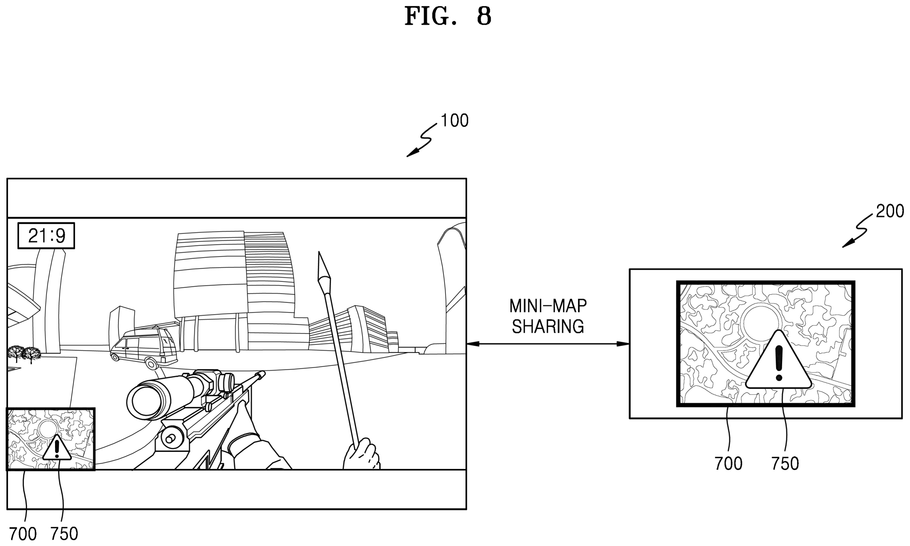

FIG. 8 is a reference diagram for describing an example of sharing a mini-map by using a mini-map sharing function, according to an embodiment of the disclosure.

Referring to FIG. 8, the electronic device 100 may communicatively connect to an external electronic device such as the display device 200, may perform mirroring on at least a portion of an image displayed in a display screen, and may allow the mirrored portion to be displayed on the display device 200. At least the portion of the image to be shared via mirroring may include a mini-map.

According to an embodiment of the disclosure, the electronic device 100 may transmit an image to the display device 200 by using a mini-map sharing function, the image corresponding to the mini-map 700 being a portion of a game screen image displayed on the display of the electronic device 100. The display device 200 may display the corresponding image in the mini-map 700, the corresponding image being received from the electronic device 100. In this manner, the electronic device 100 allows a mini-map to be displayed in the external display device 200, so that a user may see an extended mini-map in a large screen and may further easily recognize a notification event in the mini-map.

In this manner, as the electronic device 100 displays a game screen including a mini-map displaying a notification event input by a user of the electronic device 800, a user of the electronic device 100 may identify the notification event input by the user of the electronic device 800. However, in general, as the mini-map is a miniature version of an entire game space and has a small size, it may be difficult for users to recognize a notification event displayed in the mini-map or in an urgent game play situation. Therefore, in embodiments of the disclosure, the electronic device 100 may further perform operation 518 and operation 519 as operations for allowing a notification event displayed in a mini-map to be further easily recognized.

In operation 518, the electronic device 100 may detect a notification event displayed in the display screen. The electronic device 100 may detect the notification event from a mini-map displayed in the display screen.

In operation 519, the electronic device 100 may provide a visual/auditory effect, in response to identification information of the notification event detected from mini-map displayed in the display screen. In this manner, the electronic device 100 may not simply display the notification event in the mini-map but may also separately provide a visual effect or an auditory effect corresponding to the notification event so as to allow a user to further easily recognize the notification event displayed in the mini-map, so that the user may further easily use the mini-map.

Hereinafter, operations shown in FIG. 4 will now be described in detail.

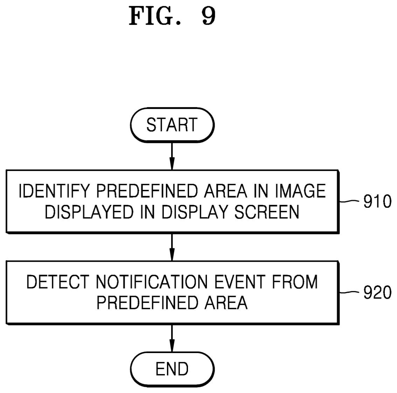

FIG. 9 illustrates an example of a flowchart of a method by which an electronic device detects whether a notification event has occurred, according to an embodiment of the disclosure.

Referring to FIG. 9, in operation 910, the electronic device 100 may identify a predefined area in an image displayed in a display screen. The predefined area may include an area in which the notification event is displayed. For example, the predefined area may include a mini-map area. Hereinafter, an example of the mini-map area will now be described.

The electronic device 100 may identify the mini-map area in an image displayed in the display screen, by using various methods.

According to an embodiment of the disclosure, the electronic device 100 may receive, via a user input, setting information about an area in which a mini-map is displayed in a screen displayed on the display of the electronic device 100, and identify the mini-map in a screen displayed on a display, according to the setting information received via the user input.

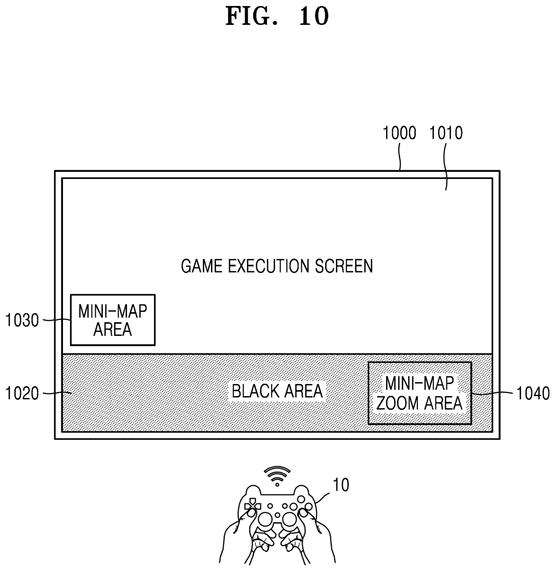

FIG. 10 illustrates an example of a display screen of the electronic device 100, according to an embodiment of the disclosure.

Referring to FIG. 10, a display screen 1000 of the electronic device 100 may include an area 1010 in which an image received from the server device 300 and corresponding to a game execution screen is displayed, and an area 1020 in which the image corresponding to the game execution screen is not displayed in the display screen 1000. The area 1020 in which the image corresponding to the game execution screen is not displayed may be referred to as the black area 1020. The game execution screen may include a mini-map area 1030. The black area 1020 may include a mini-map zoom area 1040 to display an extended image of a mini-map, according to user selection. A location of the mini-map area 1030 is not limited to a location shown in FIG. 10, and may be placed in any location in the game execution screen, according to user setting. A location of the mini-map zoom area 1040 is not limited to a location shown in FIG. 10, and may be placed in any location in the game execution screen, according to user setting.

The electronic device 100 may receive a user input of setting the mini-map area 1030 or the mini-map zoom area 1040 from the input device 10. For example, the electronic device 100 may provide a graphical user interface for designating the mini-map area 1030 or the mini-map zoom area 1040. When a user performs a manipulation operation of specifying the mini-map area 1030 or the mini-map zoom area 1040 by using the input device 10, the input device 10 may transmit an input of specifying the mini-map area 1030 or the mini-map zoom area 1040 to the electronic device 100. Accordingly, the electronic device 100 may store user setting of specifying the mini-map area 1030 or the mini-map zoom area 1040, and afterward, when the display device identifies a mini-map area in a display screen, the electronic device 100 may identify the mini-map area 1030 or the mini-map zoom area 1040 specified according to the user setting.

According to an embodiment of the disclosure, the electronic device 100 may identify a mini-map area by using various object detection algorithms or filters via an analysis with respect to an image output from the display screen. For example, based on a shape or a size of the mini-map area, the electronic device 100 may detect the mini-map area having a corresponding shape or size in the image corresponding to the display screen. For example, when the mini-map area has a square shape, the electronic device 100 may detect an area (or an object) indicating the square shape in the image corresponding to the display screen, via edge detection using an edge detection algorithm. Alternatively, when the mini-map has a circular shape, the electronic device 100 may detect an area (or an object) indicating the circular shape in the image corresponding to the display screen, by using a circle detection algorithm. However, the disclosure is not limited thereto. Alternatively, the electronic device 100 may obtain information about a shape and size of the mini-map area, based on displayed content identification information. For example, information about a mini-map corresponding to game content may be provided for each game content, and the electronic device 100 may obtain information about a shape or a size of a mini-map provided in game content, based on displayed identification information of the game content.

According to an embodiment of the disclosure, the electronic device 100 may identify a mini-map area in the image corresponding to the display screen, by using an artificial intelligence (AI) technology based on a neural network. For example, the electronic device 100 may identify a mini-map area in the image corresponding to the display screen, by using a neural network trained based on a mini-map area corresponding to game content for each game content.

According to an embodiment of the disclosure, when a location of a mini-map area specified in game content or a game application which is currently displayed is fixed, the electronic device 100 may identify the mini-map area in the location. For example, a mini-map area provided in a game execution screen of each game content or each game application may be fixed. Therefore, in this case, the electronic device 100 may identify the location of the mini-map area which is fixed and provided according to identification information of the game content or the game application which is currently displayed, and may detect the mini-map area in the location.

Referring back to FIG. 9, in operation 920, the electronic device 100 may detect a notification event from the predefined area.

According to an embodiment of the disclosure, the electronic device 100 may store one or more pieces of notification event information which may be identified from the predefined area. Then, the electronic device 100 may detect the notification event from the predefined area, by referring to the stored one or more pieces of notification event information. In this regard, notification event information may vary according to each game application or each game content, and thus, the electronic device 100 may detect a notification event from the predefined area by referring to notification event information corresponding to currently-displayed game content. The notification event information may include an image of an item corresponding to one or more notification events. An item corresponding to a notification event may be referred to as an icon corresponding to the notification event.

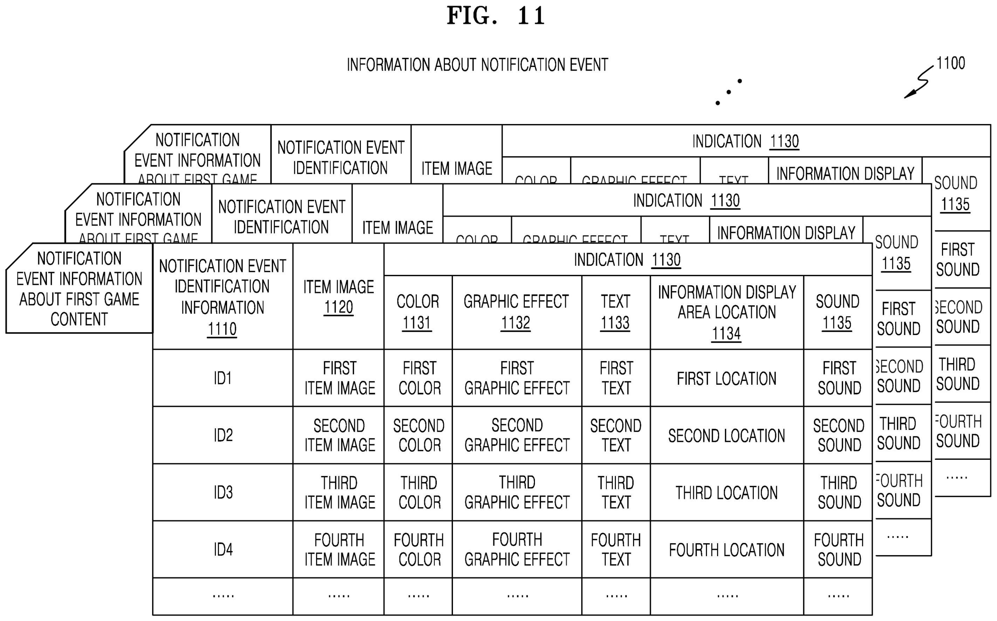

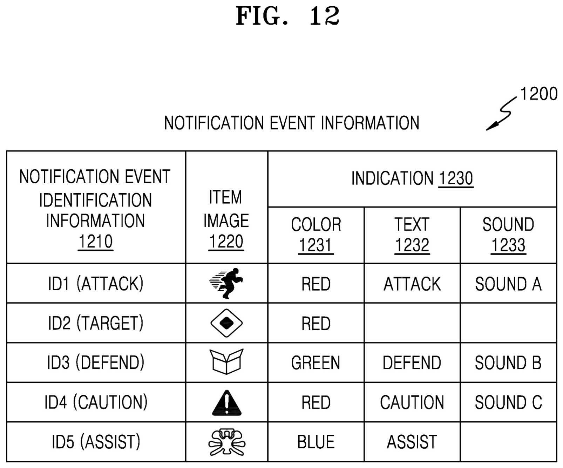

With reference to FIGS. 11 and 12, notification event information, according to an embodiment of the disclosure will now be described.

FIG. 11 illustrates an example of notification event information according to an embodiment of the disclosure.

How a notification event is to be provided may vary for each game application. Therefore, notification event information corresponding to each game application or each game content may exist. For example, the electronic device 100 may store notification event information corresponding to one or more pieces of game content (e.g., notification event information corresponding to first game content, notification event information corresponding to second game content, notification event information corresponding to third game content, and the like). For each game content, the number of notification events, a shape of an item image corresponding to a notification event, and the number and attributes of visual effects or auditory effects which correspond to notification events may vary.

Referring to FIG. 11, information 1100 about a notification event corresponding to first game content may include information about ID1, ID2, ID3, ID4, etc. as information about one or more notification events.

Information about each notification event in the one or more pieces of notification event information may include notification event identification information 1110 for identifying a notification event, an item image 1120 corresponding to a notification event, and an indication 1130 corresponding to a notification event.

The notification event identification information 1110 may indicate information for identifying each notification event from among the one or more notification events.

The item image 1120 corresponding to a notification event may indicate an image of an item the electronic device 100 may detect to determine occurrence of a notification event in the image corresponding to the display screen.

The indication 1130 corresponding to a notification event may include at least one of a visual effect or an auditory effect which may be provided in response to detection of the notification event. The visual effect may include at least one of color 1131, a graphic effect 1132, a text 1133, or an information display area location 1134.

The color 1131 may indicate color to be provided as a visual effect, in response to detection of a notification event. For example, an information display area to provide a visual effect may be displayed with various colors including red color, black color, etc. The color may be displayed according to a particular pattern.

The graphic effect 1132 may indicate a graphic effect to be provided as a visual effect, in response to detection of a notification event. The graphic effect may indicate various visual effects including blinking, sparkling, etc. to be provided in an information display area to provide a visual effect. The graphic effect may have a specified period when an effect such as blinking, sparkling, etc. is provided. For example, a graphic effect may be set in such a manner that a blinking period becomes shorter to indicate a relatively imminent situation or urgent state.

The text 1133 may indicate a text to be provided as a visual effect, in response to detection of a notification event.

The information display area location 1134 may indicate a partial area of the display screen so as to provide a visual effect, in response to detection of a notification event. According to an embodiment of the disclosure, the partial area of the display screen so as to provide the visual effect, in response to detection of the notification event, may include an area in which a game execution screen is not displayed, i.e., at least a portion of a black area. According to an embodiment of the disclosure, the partial area of the display screen so as to provide the visual effect, in response to detection of the notification event, may include, when the black area includes a mini-map zoom area, at least a portion of a remaining area excluding the mini-map zoom area of the black area. According to an embodiment of the disclosure, the partial area of the display screen so as to provide the visual effect, in response to detection of the notification event, may include at least a portion of a remaining area excluding an area of a shared mini-map in a screen of other display device that displays the shared mini-map when the electronic device 100 shares the mini-map with the other display device by using a mini-map sharing function.

The auditory effect may include sound 1135. The sound 1135 may include not only sound of various effects but may also include voice sound uttering the text 1133.

The notification event information is not limited to the example shown in FIG. 11.

While FIG. 11 illustrates that a location of the information display area to provide a visual effect, in response to each notification event, is fixed, the disclosure is not limited thereto.

According to an embodiment of the disclosure, according to a location in a game space where each notification event has occurred, a visual effect or an auditory effect may vary or a location of an information display area to provide the visual effect may vary.

According to an embodiment of the disclosure, notification event information may be configured in such a manner that a visual effect or an auditory effect may vary or a location of an information display area in which a visual effect is to be provided may vary, according to a case where a location in a game space where the notification event has occurred is within a space displayed in a display screen of the electronic device 100, and a case where it is not the space displayed in the display screen of the electronic device 100. For example, the electronic device 100 may identify whether the location in the game space where the notification event has occurred is within the space displayed in the display screen of the electronic device 100. When it is identified that the location in the game space where the notification event has occurred is within the space displayed in the display screen of the electronic device 100, the electronic device 100 may provide a visual effect or an auditory effect according to a first indication corresponding to the notification event. When it is identified that the location in the game space where the notification event has occurred is not within the space displayed in the display screen of the electronic device 100, the electronic device 100 may provide a visual effect or an auditory effect according to a second indication corresponding to the notification event. The first indication and the second indication may have different sets of a visual effect and/or an auditory effect.

According to an embodiment of the disclosure, notification event information may be configured in such a manner that a visual effect or an auditory effect may vary or a location of an information display area in which a visual effect is to be provided may vary, according to whether a location in a game space where the notification event has occurred is close to or distant from a character of a user of the electronic device 100. For example, the electronic device 100 may calculate a distance between the location in the game space where the notification event has occurred and a location where the character of the user of the electronic device 100 exists, and may determine whether the calculated distance exceeds a threshold. When the electronic device 100 determines that the calculated distance exceeds the threshold, the electronic device 100 may provide a visual effect or an auditory effect according to a first indication corresponding to the notification event. When the electronic device 100 determines that the calculated distance does not exceed the threshold, the electronic device 100 may provide a visual effect or an auditory effect according to a second indication corresponding to the notification event. The first indication and the second indication may have different sets of a visual effect and/or an auditory effect.

FIG. 12 illustrates an example of notification event information according to an embodiment of the disclosure.

Referring to FIG. 12, the notification event information 1200 may include five notification events. Notification event identification information 1210 may include ID1 indicating "Attack", ID2 indicating "Target", ID3 indicating "Defend", ID4 indicating "Caution", and ID5 indicating "Assist". An item image 1220 may correspond to each notification event identification information 1210. For notification event ID1, RED is set for color 1231, Attack is set for text 1232, and Sound A is set for sound 1233. For notification event ID2, RED is set for color 1231, For notification event ID3, GREEN is set for color 1231, Defend is set for text 1232, and Sound B is set for sound 1233. For notification event ID4, RED is set for color 1231, Caution is set for text 1232, and Sound C is set for sound 1233. For notification event ID5, BLUE is set for color 1231, and Assist is set for text 1232. When the electronic device 100 detects an item image corresponding to ID1 in a mini-map area, according to the notification event information 1200, the electronic device 100 may display red color as color of an information display area, may output <Attack> as a text, and may output Sound A as an auditory effect.

Referring back to FIG. 9, in operation 920, the electronic device 100 may detect, in the predefined area, one of item images from the notification event information described with reference to FIG. 11.

According to an embodiment of the disclosure, the electronic device 100 may determine, by using various object detection algorithms or filters via an analysis with respect to an image of the predefined area, whether an item image is detected from the predefined area, the item image included in notification event information corresponding to game content or a game application which is currently displayed in the display screen.

According to an embodiment of the disclosure, the electronic device 100 may determine, by using an Al technology based on a neural network, whether an item image is detected from the predefined area, the item image included in notification event information corresponding to game content or a game application which is currently displayed in the display screen. For example, the electronic device 100 may detect an item image for a notification event in a mini-map area, by using a neural network trained based on item images included in notification event information corresponding to game content for each game content.

An algorithm or a set of algorithms for implementing the AI technology is referred to as a neural network. Here, the neural network may receive input data, may analyze the input data, and may output aimed result data. In order for the neural network to correctly output the result data corresponding to the input data, there is a need to train the neural network. Here, 'training' may indicate that a neural network is trained to discover or identify by itself a method of inputting various pieces of data to the neural network and analyzing the pieces of input data, a method of classifying the pieces of input data, and/or a method of extracting, from the pieces of input data, features for generating result data. Here, 'training' may be expressed as 'learning'. Also, a set of algorithms for outputting result data corresponding to input data via the neural network, software for executing the set of algorithms, and/or hardware for executing the set of algorithms may be referred to as an 'AI model' (an 'artificial intelligence model'). The Al model may exist in various forms. In detail, there may be various AI models for receiving an input of an image, analyzing the input image, and classifying a gesture of an object included in the image into at least one class. The Al model may include at least one neural network.

For example, a method of performing objection recognition, object tracing, and/or objection identification by using an AI technology performing an operation via a neural network is developed and used. Hereinafter, for convenience of descriptions, operations of performing objection recognition, object tracing, objection identification, etc. for recognizing a particular image object by analyzing an image are collectively referred to as "object recognition". For example, the neural network may be a deep neural network (DNN) including a plurality of layers so as to perform multi-layer operations. Also, the DNN operation may include a convolution neural network (CNN) operation, etc. In detail, via the neural network, a data recognition model for object recognition may be implemented, and the implemented recognition model may be trained by using training data. Then, input data, e.g., a received image, may be analyzed, an object may be recognized from the input image, and the recognized object may be output as result data, by using the trained data recognition model. Also, the CNN refers to all neural networks configured to perform an algorithm for finding a pattern by analyzing an image, and may include various types and forms.

In this manner, when the electronic device 100 detects one of item images included in notification event information from a predefined area, at least one of a visual effect or an auditory effect included in an indication corresponding to the detected item image may be output.

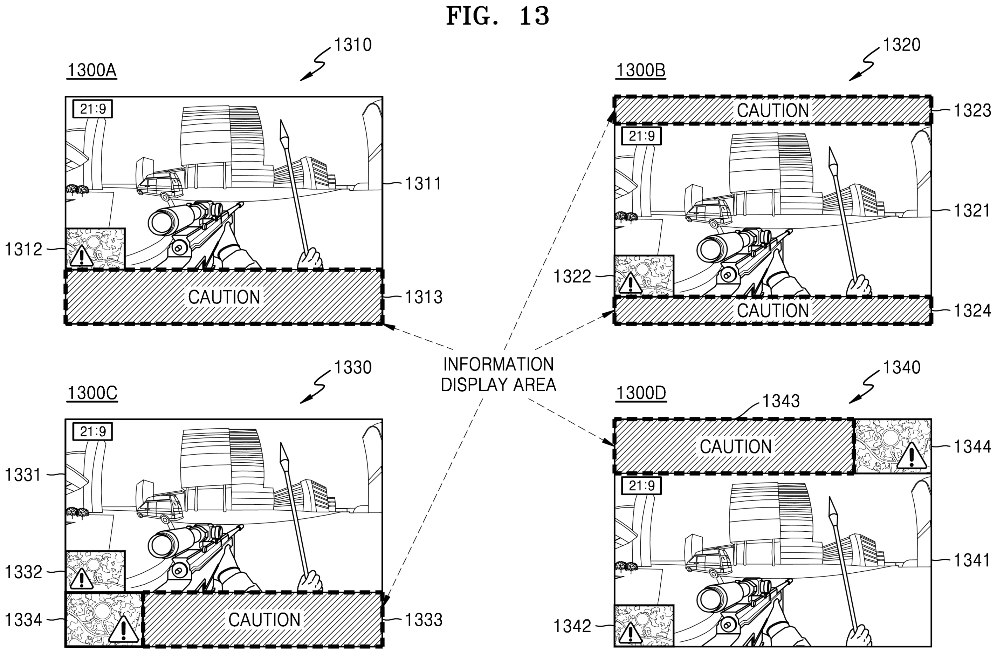

According to an embodiment of the disclosure, the electronic device 100 may display a visual effect corresponding to a detected notification event in an information display area of a display screen, e.g., a black area, in which a game execution screen is not displayed. Various locations of the information display area will now be described with reference to FIG. 13.

FIG. 13 illustrates an example of information display areas in which a visual effect corresponding to a notification event is displayed, according to an embodiment of the disclosure.

Referring to FIG. 13, in a case 1300A in which a game execution screen 1311 including a mini-map 1312 at the bottom of a display screen 1310 of the electronic device 100 is displayed, and a black area 1313 is located at the bottom, the electronic device 100 may provide a visual effect to at least a portion of the black area 1313 as an information display area. That is, the electronic device 100 may provide the visual effect corresponding to a notification event detected at the mini-map 1312 to at least the portion of the black area 1313. Referring to the notification event information 1200 shown in FIG. 12, when an item image corresponding to notification event ID4 is detected, the electronic device 100 may display red color in at least the portion of the black area 1313, may output a text of <Caution>, and may output Sound C as an auditory effect.

In a case 1300B in which a game execution screen 1321 including a mini-map 1322 at the bottom of a display screen 1320 of the electronic device 100 is displayed, and a black area 1323 and a black area 1324 are located at the top and the bottom, the electronic device 100 may provide a visual effect to at least a portion of each of the black area 1323 and the black area 1324 as an information display area. Referring to the notification event information 1200 shown in FIG. 12, when an item image corresponding to notification event ID4 is detected, the electronic device 100 may display red color in at least the portion of each of the black area 1323 and the black area 1324, may output a text of <Caution>, and may output Sound C as an auditory effect.

In a case 1300C in which a game execution screen 1331 including a mini-map 1332 at the bottom of a display screen 1330 of the electronic device 100 is displayed, and a mini-map zoom area 1334 is located in a black area 1333 at the bottom, the electronic device 100 may provide a visual effect to at least a portion of the black area 1333 as an information display area. That is, the electronic device 100 may provide the visual effect corresponding to a notification event detected at the mini-map 1332 or the mini-map zoom area 1334 to at least the portion of the black area 1333. Referring to the notification event information 1200 shown in FIG. 12, when an item image corresponding to notification event ID4 is detected, the electronic device 100 may display red color in at least the portion of the black area 1333, may output a text of <Caution>, and may output Sound C as an auditory effect.

In a case 1300D in which a game execution screen 1341 including a mini-map 1342 at the bottom of a display screen 1340 of the electronic device 100 is displayed, and a mini-map zoom area 1344 is located in a black area 1343 at the top, the electronic device 100 may provide a visual effect to at least a portion of the black area 1343 as an information display area. That is, the electronic device 100 may provide the visual effect corresponding to a notification event detected at the mini-map 1342 or the mini-map zoom area 1344 to at least the portion of the black area 1343. Referring to the notification event information 1200 shown in FIG. 12, when an item image corresponding to notification event ID4 is detected, the electronic device 100 may display red color in at least the portion of the black area 1343, may output a text of <Caution>, and may output Sound C as an auditory effect.

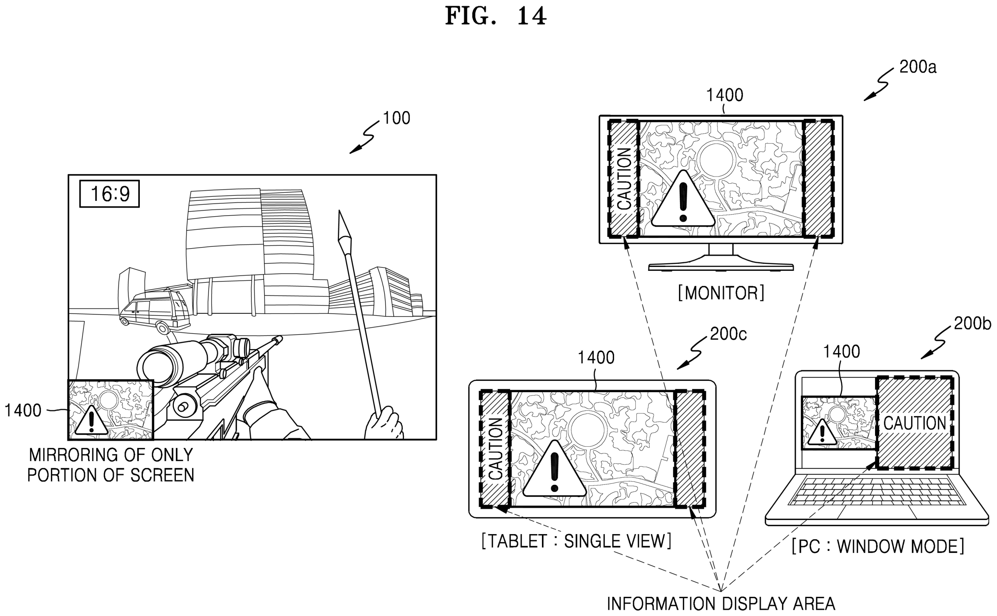

According to an embodiment of the disclosure, the electronic device 100 may display a visual effect corresponding to a detected notification event in an information display area of a display screen of a display device that is communicatively connected to the electronic device 100. For example, the information display area of the display screen of the display device may include an area or a black area in which a shared mini-map is not displayed. An example in which a visual effect corresponding to a notification event is displayed in a display screen of a display device that is communicatively connected to the electronic device 100 will now be described with reference to FIG. 14.

FIG. 14 is a reference diagram for describing an example in which the electronic device 100 displays a visual effect corresponding to a notification event in a display screen of a display device that is communicatively connected to the electronic device 100, according to an embodiment of the disclosure.

Referring to FIG. 14, the electronic device 100 may communicatively connect to the display device 200 so as to share at least a portion of an image displayed in a display screen of the electronic device 100. For image sharing, various screen mirroring technologies may be used.

According to an embodiment of the disclosure, when the electronic device 100 displays a game execution screen, the electronic device 100 may communicatively connect to the display device 200 so as to share a mini-map area. Only the mini-map area is displayed in the display screen of the display device 200, a user may experience a mini-map area with a further extended size. The electronic device 100 may communicatively connect to various types of the display device 200. For example, the display device 200 may include a monitor 200a, a PC 200b, and a tablet computer 200c.

Referring to FIG. 14, the monitor 200a, the PC 200b, and the tablet computer 200c which are enabled to share and display a mini-map area of the electronic device 100 are displayed. The monitor 200a may include a middle area in which a mini-map received using mirroring from the electronic device 100 is displayed, and a right area and a left area of a screen in which black areas may exist. The electronic device 100 may control a visual effect corresponding to a notification event detected in the mini-map to be provided by using at least a portion of each of the black areas of the monitor 200a as an information display area. The PC 200b may include a left area of a screen in which a mini-map received from the electronic device 100 by using mirroring is displayed, and a right area of the screen in which a window is displayed. The electronic device 100 may control a visual effect corresponding to a notification event detected in the mini-map to be provided by using at least a portion of the window area included in the right area of the PC 200b as an information display area. The tablet computer 200c may include a middle area of a screen in which a mini-map received from the electronic device 100 by using mirroring is displayed, and a right area and a left area of the screen in which black areas may exist. The electronic device 100 may control a visual effect corresponding to a notification event detected in the mini-map to be provided by using at least a portion of each of the black areas of the tablet computer 200c as an information display area.

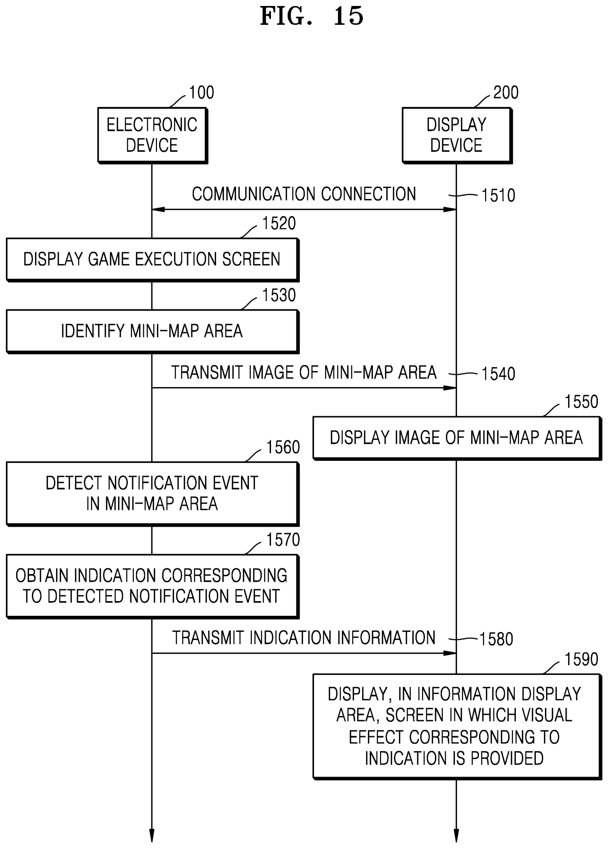

FIG. 15 illustrates an example of a flowchart of an operating method of an electronic device, according to an embodiment of the disclosure.

Referring to FIG. 15, in operation 1510, the electronic device 100 and the display device 200 may be communicatively connected. According to an embodiment of the disclosure, the electronic device 100 may perform communication connection to allow at least a portion of an image displayed in a display screen of the electronic device 100 to be displayed on a screen of the display device 200 via mirroring. For example, the electronic device 100 may perform communication connection by using a Wi-Fi communication technology or a Bluetooth communication technology.

In operation 1520, the electronic device 100 may display a game execution screen.

In operation 1530, the electronic device 100 may identify a mini-map area in the game execution screen.

In operation 1540, the electronic device 100 may transmit an image corresponding to the identified mini-map area to the display device 200.

In operation 1550, the electronic device 100 may display the image of the mini-map area on a display.

In operation 1560, the electronic device 100 may detect a notification event in the mini-map area.

In operation 1570, the electronic device 100 may obtain an indication corresponding to the detected notification event. The indication may include a visual effect or an auditory effect to be provided, in response to the notification event.

In operation 1580, the electronic device 100 may transmit indication information or a screen of the displayed indication to the display device 200. The electronic device 100 may transmit, to the display device 200, the indication information indicating to provide a visual effect or provide an auditory effect to an area excluding the mini-map area, according to the indication.

In operation 1590, the display device 200 may display, in an information display area, a screen in which the visual effect corresponding to the indication is provided.

According to an embodiment of the disclosure, the electronic device 100 may store not only information about a preset notification event but also information about a notification event added or edited, based on a user input. When executing a game application, a user may want to add a notification event or edit an existing notification event, according to his/her intention. Therefore, the electronic device 100 may provide a graphical user interface for allowing the user to edit or add a notification event.

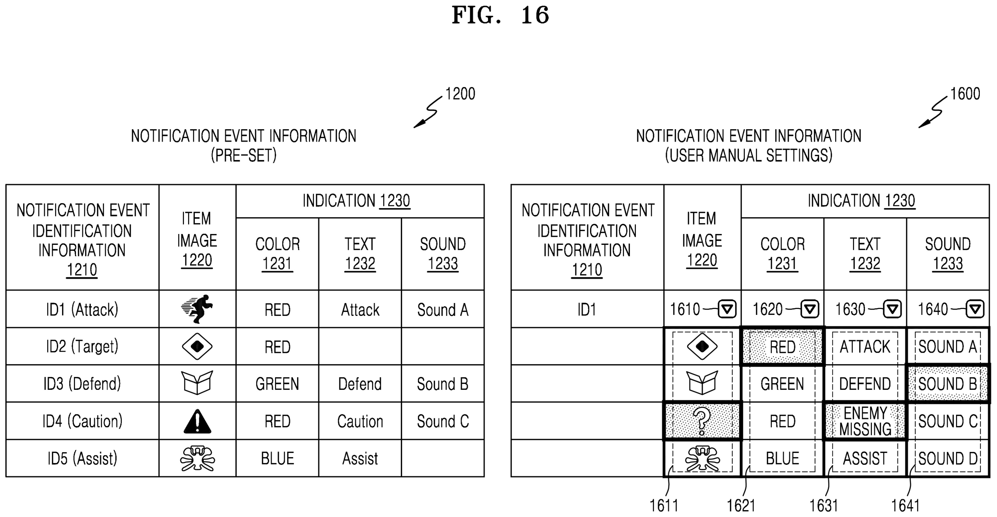

FIG. 16 is a reference diagram for describing information about a notification event settable according to a user input, according to an embodiment of the disclosure.

Referring to FIG. 16, the electronic device 100 may include not only information about a preset notification event but also information about a notification event according to user setting.

According to an embodiment of the disclosure, the electronic device 100 may provide a graphical user interface 1600 for allowing a user to add or edit notification event information.

For example, referring to FIG. 16, the user may edit an item image and an indication which correspond to notification event ID1. For example, when an icon 1610 for selecting an item image is selected, the electronic device 100 may output an icon 1611 including a plurality of selectable item images. When an icon 1620 for selecting color is selected, the electronic device 100 may output an icon 1621 including a plurality of selectable colors. When an icon 1630 for selecting a text is selected, the electronic device 100 may output an icon 1631 including a plurality of selectable colors. When an icon 1640 for selecting sound is selected, the electronic device 100 may output an icon 1641 including a plurality of selectable items of sound. For example, the user may select a third item as an item image from the icon 1611, in response to the first notification event ID1, may select RED from the icon 1621, may select Enemy missing as a text from the icon 1631, and may select Sound B as sound from the icon 1641, thereby setting notification event information corresponding to the notification event ID1. By providing a graphical user interface allowing editing of notification event information, it is possible to allow a user to change or edit and use a notification event according to user's intention.

The operating method of the electronic device according to embodiments of the disclosure may be embodied as programmed commands executable in various computer means, and then may be recorded on a computer-readable medium. Also, embodiments of the disclosure may be recorded on a computer-readable recording medium having recorded thereon one or more programs including instructions for executing the operating method of the display device.

The computer-readable medium may include one or more of the programmed commands, data files, data structures, or the like. The programmed commands recorded on the computer-readable recording medium may be particularly designed or configured for the disclosure or may be well-known to one of ordinary skill in the art. Examples of the computer-readable recording medium include magnetic media such as hard disks, floppy disks and magnetic tapes, optical recording media such as a compact disc read only memory (CD-ROM) and a digital versatile disk (DVD), magneto-optical media such as a floptical disk, a read-only memory (ROM), a random-access memory (RAM), a flash memory, and the like, and may be particularly configured to store and perform the programmed commands. Examples of the programmed commands include not only machine code made by a compiler but also include high-level language code executable in a computer by using an interpreter.

Here, a machine-readable storage medium may be provided in the form of a non-transitory storage medium. Here, the term 'non-transitory storage medium' may mean that the storage medium is a tangible device and does not include signals (e.g., electromagnetic waves), and may mean that data may be permanently or temporarily stored in the storage medium. For example, the 'non-transitory storage medium' may include a buffer in which data is temporarily stored.

According to an embodiment of the disclosure, the method according to various embodiments of the disclosure may be included and provided in a computer program product. The computer program product may be traded as a product between a seller and a buyer. The computer program product may be distributed in the form of a machine-readable storage medium (e.g., a CD-ROM) or may be distributed (e.g., downloaded or uploaded) online through an application store (e.g.: PlayStore^{™}) or directly between two user apparatuses (e.g., smartphones). In a case of online distribution, at least a portion of the computer program product (e.g., a downloadable application) may be at least temporarily stored or temporarily generated in a machine-readable storage medium such as a manufacturer's server, a server of an application store, or a memory of a relay server.

## Claims

1. An electronic device comprising:
memory storing at least one instruction; and
at least one processor configured to execute the at least one instruction,
wherein the at least one instruction, when executed by the at least one processor, causes the electronic device to:
detect whether a notification event has occurred in a display screen in which an image is displayed, the notification event indicating information that another user is attempting to provide to a user;
obtain, based on detecting that the notification event has occurred, an indication comprising at least one of a visual effect or an auditory effect corresponding to the notification event; and
provide, to the user, the indication by using at least one of an information display area or an audio output unit.

2. The electronic device of claim 1, wherein the at least one instruction, when executed by the at least one processor, further causes the electronic device to:
identify a predefined area in the image displayed in the display screen; and
detect the notification event based on the predefined area.

3. The electronic device of claim 1 or 2, wherein the at least one instruction, when executed by the at least one processor, further causes the electronic device to:
identify the predefined area by at least one of receiving, from the user, setting information of the predefined area or automatically detecting the predefined area from the image.

4. The electronic device of any one of claims 1 to 3, wherein the at least one instruction, when executed by the at least one processor, further causes the electronic device to:
detect the notification event by detecting an item image corresponding to the notification event in the predefined area, based on one or more pieces of notification event information.

5. The electronic device of any one of claims 1 to 4, wherein the one or more pieces of notification event information comprise:
identification information about the notification event;
the item image corresponding to the notification event; and
at least one of the visual effect or the auditory effect corresponding to the notification event.

6. The electronic device of any one of claims 1 to 5, wherein the at least one instruction, when executed by the at least one processor, further causes the electronic device to:
obtain the indication corresponding to the notification event by referring to registered indications corresponding to the one or more pieces of notification event information and the identification information about the notification event.

7. The electronic device of any one of claims 1 to 6, wherein the information display area comprises a predetermined area of the display screen in which the image is not displayed, and
wherein the at least one instruction, when executed by the at least one processor, further causes the electronic device to provide the visual effect by using the predetermined area.

8. The electronic device of any one of claims 1 to 7, wherein the information display area comprises a predetermined area in a display of an external display device configured to share and display at least one portion of the display screen displayed in the electronic device, and
wherein the at least one instruction, when executed by the at least one processor, further causes the electronic device to provide the visual effect by using the predetermined area in the display of the external display device.

9. The electronic device of any one of claims 1 to 8, wherein the at least one portion of the display screen comprises a mini-map area, and
wherein the predetermined area in the display of the external display device comprises an area excluding an area in which the mini-map area is displayed.

10. The electronic device of any one of claims 1 to 9, wherein the at least one instruction, when executed by the at least one processor, further causes the electronic device to:
identify a first location in which the notification event has occurred in game content; and
determine a second location in which the indication is to be provided, based on the first location in which the notification event has occurred.

11. An operating method of an electronic device, the operating method comprising:
detecting whether a notification event has occurred in a display screen in which an image is displayed, the notification event indicating information that another user is attempting to provide to a user;
obtaining, based on detecting that the notification event has occurred, an indication comprising at least one of a visual effect or an auditory effect corresponding to the notification event; and
providing, to the user, the indication by using at least one of an information display area or an audio output unit.

12. The operating method of claim 11, further comprising:
identifying a predefined area in the image displayed in the display screen; and
detecting the notification event based on the predefined area.

13. The operating method of claim 11 or 12, further comprising:
identifying the predefined area by at least one of receiving, from the user, setting information of the predefined area or automatically detecting the predefined area from the image.

14. The operating method of any one of claims 11 to 13, further comprising:
detecting the notification event by detecting an item image corresponding to the notification event in the predefined area, based on one or more pieces of notification event information.

15. A non-transitory computer-readable storage medium storing one or more computer-executable instructions, for causing a computer to perform an operating method of an electronic device, that, when executed by at least one processor of the electronic device, cause the electronic device to:
detect whether a notification event has occurred in a display screen in which an image is displayed, the notification event indicating information that another user is attempting to provide to a user;
obtain, based on detecting that the notification event has occurred, an indication comprising at least one of a visual effect or an auditory effect corresponding to the notification event; and
provide, to the user, the indication by using at least one of an information display area or an audio output unit.
